# EUROPEAN PATENT SPECIFICATION

(11) **EP 2 854 067 B1**
(45) Date of publication and mention of the grant of the patent: **27.02.2019**
(21) Application number: 13794243.9
(22) Date of filing: 25.03.2013
(51) Int. Cl.: G06F 21/62, H04L 9/08, H04L 9/32

(54) **INFORMATION PROCESSING DEVICE, INFORMATION PROCESSING SYSTEM, INFORMATION PROCESSING METHOD, AND PROGRAM**
INFORMATIONSVERARBEITUNGSVORRICHTUNG, INFORMATIONSVERARBEITUNGSSYSTEM, INFORMATIONSVERARBEITUNGSVERFAHREN UND PROGRAMM
DISPOSITIF DE TRAITEMENT D'INFORMATIONS, SYSTÈME DE TRAITEMENT D'INFORMATIONS, PROCÉDÉ DE TRAITEMENT D'INFORMATIONS ET PROGRAMME

(30) Priority: 21.05.2012 JP 2012115394
(43) Date of publication of application: 01.04.2015
(73) Proprietor: Sony Corporation, Tokyo 108-0075 (JP)
(72) Inventor: UEDA, Kenjiro, Minato-Ku Tokyo 108-0075 (JP); KUNO, Hiroshi, Minato-Ku Tokyo 108-0075 (JP); KOBAYASHI, Yoshiyuki, Minato-Ku Tokyo 108-0075 (JP)
(74) Representative: Witte, Weller & Partner Patentanwälte mbB
(86) International application number: PCT/JP2013/058596
(87) International publication number: WO 2013/175851

(56) References cited:
- EP-A1- 2 400 491
- WO-A1-2005/109209
- WO-A1-2008/004524
- JP-A- 2004 260 834
- JP-A- 2012 008 756
- US-A1- 2004 168 056
- US-A1- 2005 228 998
- "Content Protection for Recordable Media Specification: SD Memory Card Book SD-Binding Part", 20051208, no. Revision 0.92, 8 December 2005 (2005-12-08), pages 1-42, XP007922639,
- MARC A KAPLAN: "IBM Cryptolopes, SuperDistribution and Digital Rights Management", INTERNET CITATION, 30 December 1996 (1996-12-30), XP002132994, Retrieved from the Internet: URL:http://www.research.ibm.com/people/k/k aplan/cryptolope-docs/crypap.html [retrieved on 2000-03-14]

## Description

### TECHNICAL FIELD

The present disclosure relates to information processing apparatuses, information processing systems, information processing methods, and programs. More particularly, the present disclosure relates to an information processing apparatus that realizes a process to efficiently acquire a revocation list in which invalidation information about servers, recording/reproducing apparatuses, and the like is recorded, an information processing system, an information processing method, and a program.

### BACKGROUND ART

Content such as movies and music is provided to users via various media such as a DVD (Digital Versatile Disc), a Blu-ray Disc (a registered trade name), and a flash memory, a network such as the Internet, or broadcast waves. A user can reproduce content by using a recording/reproducing apparatus such as a PC, a portable terminal, or a BD player, or an information processing apparatus such as a television set.

However, the copyrights, distribution rights, and the like of most pieces of content such as music data and image data to be provided to users are held by the creators of the content or distributors. Therefore, when providing content to users, a content provider puts a predetermined usage restriction on the content in many cases.

There have been problems that recording and reproduction can be repeated with some digital recording apparatuses and recording media without degrading images and sound, and the use of unauthorized copies of content such as distributions of unauthorized copies of content over the Internet and distributions of so-called pirated disks is widely spread.

As a specific measure to prevent such unauthorized use of content, there is a content encryption process. This is a process to encrypt content to be provided to users, and allow only authorized users to acquire the encryption key to the content. Such a process is disclosed in Patent Document 1 (JP 2008-98765 A), for example.

The key to be used in decrypting encrypted data is given only to the reproducing apparatuses granted the license to use the content. The license is granted to reproducing apparatuses that are designed to comply with predetermined operation rules such as not to make unauthorized copies. Meanwhile, reproducing apparatuses not granted the license are unable to decrypt encrypted data, not having the key for decrypting encrypted data.

However, even if the above described processes are performed, it is difficult to completely eliminate the existence of unauthorized reproducing apparatuses that release the key to open public and unauthorized servers that provide copied content.

So as to prevent such unauthorized operations by unauthorized devices, a revocation list (Revocation List) that is a list of identifiers (IDs) of unauthorized devices is used.

In a case where content and key information are transmitted and received between two devices, for example, a revocation list is used as a list for determining whether the other device is an unauthorized device in an authentication process for checking validity of the other end of communication.

In a case where new content is downloaded from a server and is recorded into an information storage device such as a memory card, for example, a mutual authentication process is performed between the server and the information storage device.

In a case where a reproducing apparatus (host) reads and reproduces content stored in an information storage device, a mutual authentication process is performed between the reproducing apparatus (host) and the information storage device.

In this authentication process, the respective devices check whether each other device is an unauthorized device having an identifier (ID) registered in a revocation list. Transmission and reception of content and key information are allowed on condition of successful authentication including confirmation that the other end of the communication is not an unauthorized device registered in a revocation list.

In this manner, a revocation list is referred to when a check is made to determine whether the ID of the other device in an authentication process is registered in the revocation list.

If the ID of the other device is recorded in the revocation list, the other device is determined to be an unauthorized device, the authentication fails, and various later processes, such as recording and reproducing of content, and a process to provide key information, are prohibited.

The revocation list is issued and is updated by a license managing apparatus (LA) as needed. Also, an electronic signature of the license managing apparatus (LA) as the issuer is put to the revocation list, so that falsification is prevented.

For example, a user device that performs content reproduction or the like checks validity of the revocation list by performing signature verification on the revocation list, and then checks the IDs registered in the revocation list. That is, a check is made to determine whether IDs of a reproducing apparatus, a recording apparatus, a server, and the like are registered, and, only when none of the IDs is registered, are later processes such as transfer of content and secret information like key information or recording and reproduction of content performed.

In a case where a new unauthorized device is discovered, the license managing apparatus (LA) adds and registers the ID of the new unauthorized device to the revocation list. That is, a revocation list update process is performed. In this manner, the revocation list is upgraded (updated) as needed and is distributed.

The updated revocation list is provided to user devices via a network. Alternatively, the updated revocation list is recorded in a medium in which content is recorded, and is provided to user devices.

For example, in a case where an information storage device such as a memory card acquires, from a key providing server, the encryption key to be used in decrypting encrypted content stored in the information storage device, a mutual authentication process is also performed between the information storage device such as a memory card and the key providing server, and validity of the other device in this authentication process is checked by referring to the revocation list.

At a time of such an authentication process between devices, the versions of the revocation lists held by both devices are compared. In a case where one of the devices holds a new version of the revocation list while the other device holds an old version of the revocation list, a process to replace the old version of the revocation list with the new version of the revocation list is performed.

Through such a process, for example, the revocation lists held by the respective devices are updated as needed.

In a key providing server that provides encryption keys, for example, the revocation list is regularly updated. However, a revocation list stored in a reproducing apparatus or an information storage device such as a memory card on the user side often remains an old revocation list unless a process such as a content download process is performed.

Therefore, in many cases where an information storage device that is a user device such as a memory card is to download new encrypted content and acquire an encryption key from a key providing server, the revocation list on the memory card side needs to be updated.

In such cases, the memory card has to acquire a new revocation list. However, a revocation list has a relatively data volume, and therefore, downloading a revocation list requires time.

If a new version of a revocation list is to be acquired from one server, for example, revocation list acquisition requests from a large number of user devices are directed to the single server. As a result, the load on the server increases, and the possibility of process delay becomes higher.

### CITATION LIST

### PATENT DOCUMENT

Patent Document 1: JP 2008-98765 A

EP 2 400 491 A1 discloses an information processing device having a memory with a protected area which is a data recording area in which access restriction is set. The information processing device further comprises a data processing unit that determines accessibility in response to a request for accessing the protected area from an access requesting device, wherein the data processing unit verifies a device certificate received from the access requesting device and determines accessibility to the protected area based on access control information recorded in the device certificate.

### SUMMARY OF THE INVENTION

### PROBLEMS TO BE SOLVED BY THE INVENTION

The present disclosure is being made in view of the above problems, for example, and aims to provide an information processing apparatus that realizes a process to efficiently acquire a revocation list in which invalidation information about servers, recording/reproducing apparatuses, and the like is recorded, an information processing system, an information processing method, and a program.

### SOLUTIONS TO PROBLEMS

A first aspect of the present disclosure lies in an information processing apparatus that includes
a data processing unit that controls updating of a revocation list to be stored into a data storage unit attached to the information processing apparatus,
wherein the data processing unit performs a process to
acquire access information about the revocation list from a data recording server that performs data recording on the data storage unit,
acquire the revocation list from a revocation list providing server, using the acquired access information, and
record the acquired revocation list into the data storage unit, wherein the data processing unit performs a process to input a data writing process command not including a revocation list from the data recording server, insert the acquired revocation list into the command, perform a process based on the command, and record the revocation list into the data storage unit, the data writing process command being a command to write data into the data storage unit.

Further, in an embodiment of the information processing apparatus of the present disclosure, the data recording server is a content correspondence information providing server that records an encryption key into the data storage unit, the encryption key being to be used in decrypting encrypted content recorded in the data storage unit, and a server that records the encryption key into the data storage unit on condition of successful authentication between the data storage unit and the content correspondence information providing server.

Further, in an embodiment of the information processing apparatus of the present disclosure, the data processing unit acquires a revocation list URL as the access information about the revocation list from the data recording server, and acquires the revocation list from the revocation list providing server by using the acquired revocation list URL.

Further, in an embodiment of the information processing apparatus of the present disclosure, when a revocation list stored in the data storage unit is determined to be an older version than a revocation list held by the data recording server, the data processing unit acquires the revocation list from the revocation list providing server.

Further, in an embodiment of the information processing apparatus of the present disclosure, the data processing unit acquires the revocation list from the revocation list providing server in parallel to an authentication process between the data storage unit and the data recording server.

Further, a second aspect of the present disclosure lies in a content correspondence information providing server that records an encryption key into an information storage device attached to an information processing apparatus, the encryption key being to be used in decrypting encrypted content recorded in the information storage device,
the content correspondence information providing server being configured to
transmit access information about a revocation list to be recorded into the data storage unit, to the information processing apparatus, and
output a revocation list writing process command not including actual data of the revocation list to the information storage device.

Further, in an embodiment of the content correspondence information providing server of the present disclosure, the content correspondence information providing server performs an authentication process with the information storage device, and performs a process to write the encryption key on condition of successful authentication.

Further, in an embodiment of the content correspondence information providing server of the present disclosure, the content correspondence information providing server transmits a revocation list URL as the access information about the revocation list to the information processing apparatus.

Further, in an embodiment of the content correspondence information providing server of the present disclosure, the content correspondence information providing server transmits different revocation list URLs to respective information processing apparatuses.

Further, in an embodiment of the content correspondence information providing server of the present disclosure, the revocation list URL is the URL corresponding to data stored in a revocation list providing server forming a CDN (Content Delivery Network).

Further, a third aspect of the present disclosure lies in an information processing system that includes:
an information processing apparatus that uses content stored in an information storage device;
   a content usage managing server that provides content usage permission information to the information processing apparatus;
a content correspondence information providing server that provides an encryption key to be used in decrypting encrypted content stored in the information storage device; and
a revocation list providing server that holds a revocation list to be stored into the information storage device,
wherein
the information processing apparatus
acquires the content usage permission information from the content usage managing server,
acquires access information about the revocation list from the content correspondence information providing server,
acquires the revocation list from the revocation list providing server by using the acquired access information, and
records the acquired revocation list into the information storage device by using a revocation list write command output from the content correspondence information providing server, wherein the information processing apparatus performs a process to input a data writing process command not including a revocation list from the content correspondence information providing server, insert the acquired revocation list into the command, perform a process based on the command, and record the revocation list into the information storage device.

Further, in an embodiment of the information processing system of the present disclosure, the information processing apparatus acquires a revocation list URL as the access information about the revocation list from the content correspondence information providing server, and acquires the revocation list from the revocation list providing server by using the acquired revocation list URL.

Further, a fourth aspect of the present disclosure lies in an information processing method implemented in an information processing apparatus,
the information processing apparatus including
a data processing unit that controls updating of a revocation list to be stored into a data storage unit attached to the information processing apparatus,
wherein the data processing unit performs
a process to acquire access information about the revocation list from a data recording server performing data recording on the data storage unit,
aprocess to acquire the revocation list from a revocation list providing server, using the acquired access information, and
a process to record the acquired revocation list into the data storage unit.

Further, a fifth aspect of the present disclosure lies in a program for causing an information processing apparatus to perform information processing,
the information processing apparatus including
a data processing unit that controls updating of a revocation list to be stored into a data storage unit attached to the information processing apparatus,
wherein the program causes the data processing unit to perform
a process to acquire access information about the revocation list from a data recording server performing data recording on the data storage unit,
aprocess to acquire the revocation list from a revocation list providing server, using the acquired access information, and
a process to record the acquired revocation list into the data storage unit.

The program of the present disclosure is a program that can be provided in a computer-readable format from a storage medium or a communication medium to an information processing apparatus or a computer system that can execute various program codes, for example. As such a program is provided in a computer-readable format, processes in accordance with the program are realized in an information processing apparatus or a computer system.

Other objects, features, and advantages of the present disclosure will be made apparent by the embodiments of the present disclosure described below and the detailed descriptions with reference to the accompanying drawings. In this specification, a system is a logical assembly of devices, and does not necessarily mean devices with different structures incorporated into one housing.

### EFFECTS OF THE INVENTION

According to an embodiment of the present disclosure, a structure that can perform an efficient process to update the revocation list in a memory card is realized.

Specifically, the data processing unit of an information processing apparatus having a memory card or the like attached thereto performs control on updating of the revocation list to be stored into the data storage unit of the memory card. The data processing unit acquires a revocation list URL from a server that records an encryption key or the like into the data storage unit, for example. With the use of the acquired revocation list URL, a revocation list is further acquired from the revocation list providing server. The acquired revocation list is further recorded into the data storage unit. In the recording process, a data writing process command that does not include the revocation list is input from a server, the acquired revocation list is inserted into the command, a process based on the command is performed, and the revocation list is recorded.

With these structures, the process to update the revocation list in the memory card can be performed without an increase in the load on the memory card or an increase in the load on the server that performs the recording of an encryption key and the like, and a concentration of load on the revocation list providing server is avoided. Thus, an efficient process to update the revocation list in the memory card is realized.

### BRIEF DESCRIPTION OF DRAWINGS

Fig. 1 is a diagram for explaining outlines of a content providing process and a recording process.
Fig. 2 is a diagram for explaining an example structure of a memory card.
Fig. 3 is a diagram for explaining an example data structure of a server certificate (Server Certificate).
Fig. 4 is a diagram for explaining an example process of access to the memory card.
Fig. 5 is a diagram for explaining an example data structure of a revocation list.
Fig. 6 is a diagram for explaining an example of an encrypted content download recording process.
Fig. 7 is a diagram for explaining an example of an encrypted content copy recording process.
Fig. 8 is a diagram for explaining a revocation list updating sequence in content download and copy processes.
Fig. 9 is a diagram for explaining the revocation list updating sequence in content download and copy processes.
Fig. 10 is a diagram for explaining communication processes among components.
Fig. 11 is a diagram for explaining communication processes among components.
Fig. 12 is a diagram for explaining an example hardware configuration of an information processing apparatus.
Fig. 13 is a diagram for explaining an example hardware configuration of an information storage device such as a memory card.

### MODES FOR CARRYING OUT THE INVENTION

The following is a detailed description of information processing apparatuses, information processing systems, information processing methods, and programs of the present disclosure, with reference to the drawings. Explanation will be made in the following order.
1. Outlinesof a content providing process and a recording process
2. Example structure of a memory card as a content recording medium
3. Example data structure of a revocation list
4. Example process to update the revocation list in a process to record content into a memory card
4-1. Example process to update the revocation list in a content download process
4-2. Example process to update the revocation list in a content copy process
4-3. Communication sequence among the respective components
5. Example hardware configurations of respective apparatuses
6. Summary of the structure of the present disclosure

### [1. Outlines of a content providing process and a recording process]

The following is a description of a configuration of the present disclosure, with reference to the drawings.

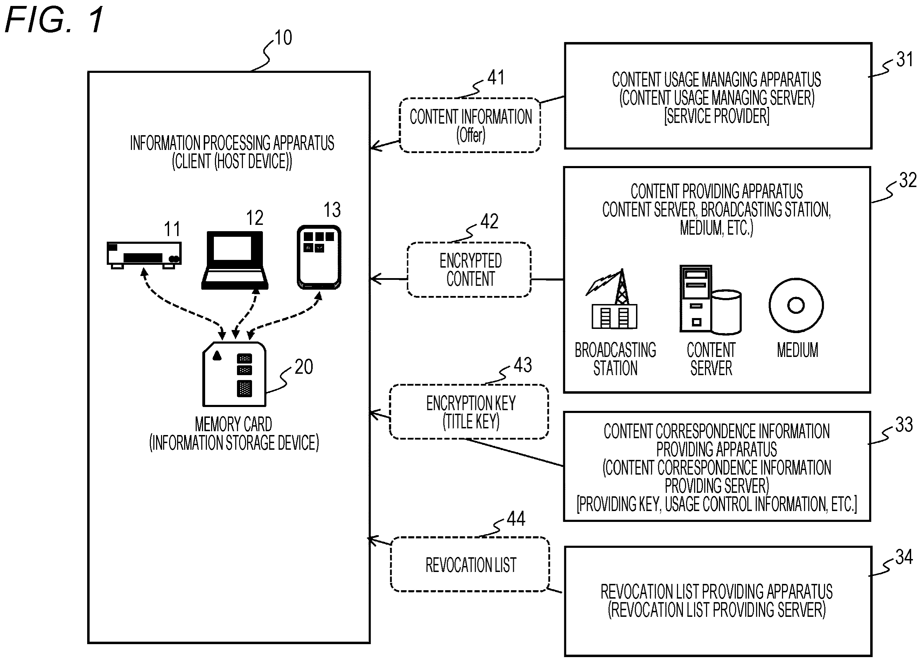

Referring first to Fig. 1, outlines of a content providing process and a recording process are described.

Fig. 1 shows the following structures:
(a) an information processing apparatus 10;
(b) a content usage managing apparatus 31;
(c) a content providing apparatus 32;
(d) a content correspondence information providing apparatus 33; and
(e) a revocation list providing apparatus 34.

The information processing apparatus 10 is an information processing apparatus 10 serving as a user device that uses content, and is also called a client or a host device in some cases.

Specifically, the information processing apparatus 10 is a reproducing apparatus 11 such as a media player, a PC 12, or a portable terminal 13.

A memory card 20 that is an information storage device having a flash memory mounted thereon is attached to the information processing apparatus 10, for example, and content that is input from outside is written into the memory card 20 so that content use such as reproduction is performed.

In a case where the information processing apparatus 10 as the user device downloads content from outside or copies content from a medium, the information processing apparatus 10 first needs to access the content usage managing apparatus 31 and obtain permission to download or copy the content. The content usage managing apparatus 31 is formed with a content usage managing server or the like operated by a service provider, for example.

As shown in the drawing, in response to a request from the information processing apparatus 10 as the user device, the content usage managing apparatus 31 provides content information (Offer) 41 containing information about downloadable content or the content to be copied.

The content providing apparatus 32 provides encrypted content 42 to the information processing apparatus 10. Specifically, the content providing apparatus 32 is formed with a broadcasting station, content server, or a medium such as a DVD or a BD, for example.

In a case where content provided by a broadcasting station or a content server is recorded into the memory card 20 attached to the information processing apparatus 10 serving as the user device, a process of the present disclosure is performed.

Also, in a case where content recorded on a medium such as a DVD or a BD owned by a user is copied into the memory card 20, the process of the present disclosure is used.

In a case where content is acquired from a content server and is recorded into the memory card 20, for example, the information processing apparatus 10 needs access information to acquire the content, and this information is included in the content information (Offer) 41 provided by the content usage managing apparatus 31, for example. Alternatively, this information may be acquired from a medium such as a DVD or a BD attached to the information processing apparatus 10.

The content correspondence information providing apparatus 33 provides the information processing apparatus 10 or the memory card 20 with the key necessary for using the encrypted content 42 provided by the content providing apparatus 32, or an encryption key 43 and the like to be used for decrypting encrypted content. In the embodiments described below, this encryption key will be referred to as a title key. A title key is a key unique to a content title that is set for each title of content.

The information processing apparatus 10 needs access information to acquire the encryption key (title key) 43, and this information is included in the content information (Offer) 41 provided by the content usage managing apparatus 31, for example. Alternatively, this information may be acquired from a medium such as a DVD or a BD attached to the information processing apparatus 10.

The content correspondence information providing apparatus 33 also provides the information processing apparatus 10 with usage control information (called Usage Rule File or Control File) containing the usage control information about the encrypted content 42 provided by the content providing apparatus 32, as well as the encryption key (title key) 43.

The usage control information contains various kinds of usage control information including allowed usage information about the content, such as whether copying into other media is allowed, and the expiration date.

In accordance with a program stored beforehand in a storage unit, the information processing apparatus 10 reads the usage control information and the encryption key (title key) corresponding to the content to be used, decrypts the encrypted content with the title key, and uses the content within the allowed range recorded in the usage control information.

The revocation list providing apparatus 34 is a revocation list providing server, for example. The revocation list providing apparatus 34 provides the latest version of a revocation list 44 issued by a license managing apparatus (LA) (not shown) to the information processing apparatus 10 and the memory card 20.

A revocation list is a list in which invalidation information about respective devices such as servers, information processing apparatuses, and memory cards is recorded.

For example, a revocation list is a list in which device IDs of invalidated devices are registered.

A revocation list is referred to when an authentication process between devices is performed, and is used to determine whether the other side in the authentication process is invalidated.

So as to prevent process delay due to a concentration of access, the revocation list providing apparatus 34 is preferably formed with more than one server.

Specifically, the revocation list providing apparatus 34 is formed as a CDN (Content Delivery Network) formed with servers, for example.

That is, the latest version of a revocation list is stored in each of the cache servers (or the edge servers) forming a CDN (Content Delivery Network).

The information processing apparatus 10 and the memory card 20 as user devices can acquire the latest version of the revocation list 44 from the cache servers (or the edge servers) forming a CDN.

Revocation list providing servers are set in respective regions, for example. Specifically, revocation list providing servers are scattered over various locations such as Europe, North America, Japan, and Asia, so that the clients in each region can acquire content from nearer or less crowded content providing servers.

Although the content usage managing apparatus 31, the content providing apparatus 32, the content correspondence information providing apparatus 33, and the revocation list providing apparatus 34 are shown as independent apparatuses in Fig. 1, these apparatuses may be set as independent apparatuses, or may be set as a structure that has the functions of several apparatuses in one apparatus.

For example, the content usage managing apparatus 31 and the content providing apparatus 32 may be set as one apparatus.

Alternatively, the content providing apparatus 32 and the content correspondence information providing apparatus 33 may be set as one apparatus.

Other than the above, various settings are possible, such as forming an apparatus that has all the functions of the content usage managing apparatus 31, the content providing apparatus 32, and the content correspondence information providing apparatus 33.

The information processing apparatus 10 records various kinds of data into the memory card 20 that is an information storage device, the various kinds of data including the encrypted content 42 acquired from the content providing apparatus 32 (such as a broadcasting station, a content server, or a medium attached to the information processing apparatus 10), the encryption key 43 received from the content correspondence information providing apparatus 33, and the like.

### [2. Example structure of a memory card as a content recording medium]

Next, an example structure of the memory card formed with a flash memory or the like to be used as a content recording destination is described.

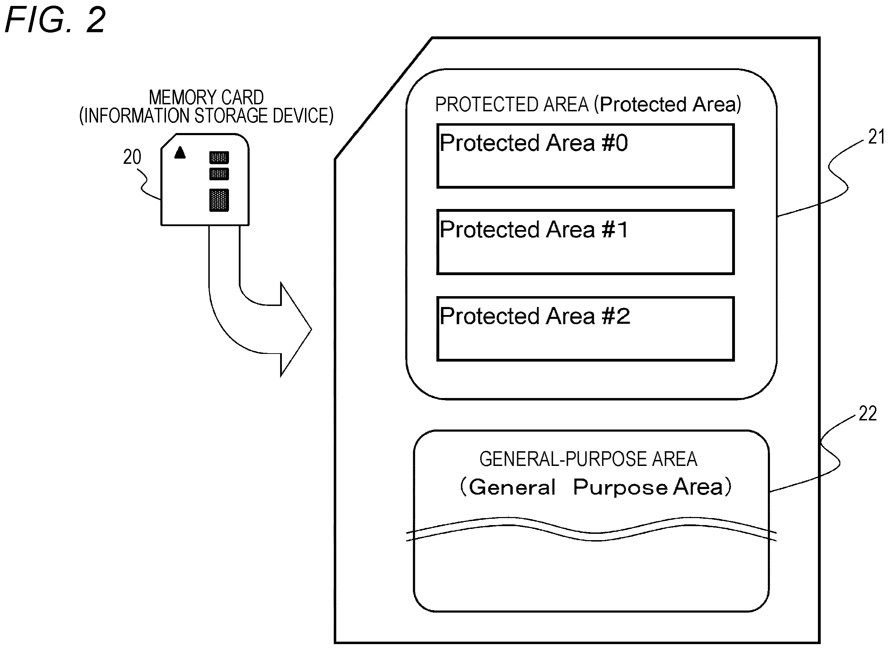

Fig. 2 shows a specific example structure of the storage area of the memory card 20.

As shown in Fig. 2, the storage area of the memory card 20 is formed with the two regions of (a) a protected area (Protected Area) 21, and (b) a general-purpose area (General Purpose Area) 22.

The (b) general-purpose area (General Purpose Area) 22 is an area that can be freely accessed by a recording/reproducing apparatus being used by the user, and stores encrypted content, general content management data, and the like. This is the area where the user can freely perform data writing and reading.

On the other hand, (a) the protected area (Protected Area) 21 is the area where free access is not allowed.

For example, in a case where data writing or reading is performed by a recording/reproducing apparatus being used by the user, a reproducing apparatus, a server connected thereto via a network, or the like, reading (Read) or writing (Write) is permitted or prohibited depending on the apparatus in accordance with the program stored beforehand in the memory card 20.

The memory card 20 includes a data processing unit for executing the prestored program and an authentication processing unit that performs an authentication process, and the memory card 20 first performs an authentication process on the apparatus that is to perform data writing or reading on the memory card 20.

In the stage of this authentication process, an apparatus certificate (a server certificate (Server Cert), for example) such as a public key certificate is received from the apparatus on the other end or the access requesting apparatus, and a check is made to determine whether to allow access to respective blocks that are the respective sectioned areas in the protected area (Protected Area) 21, using the information written in the certificate. This determination process is performed on each of the blocks (areas #0, #1, #2, ..., in the drawing) that are the sectioned areas in the protected area (Protected Area) 21 shown in Fig. 2, and a permitted process (Read and/or Write) is performed only on the permitted blocks.

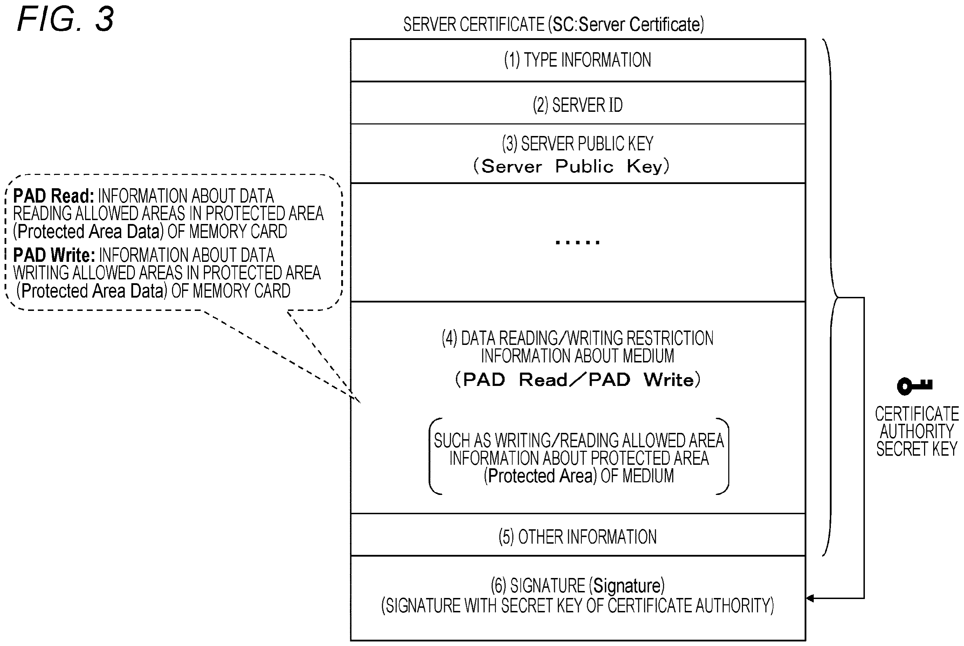

Fig. 3 shows an example data structure of a server certificate held by a server that is an example of an apparatus that performs data writing on the memory card. Fig. 3 is a diagram showing an example data structure of a server certificate (Server Certificate) to be provided to a server by a certificate authority.

A server certificate (Server Certificate) is a certificate issued to a server that is allowed a content providing process by the certificate authority, and is a certificate storing a server public key and the like. In the server certificate (Server Certificate), a signature is set with a certificate authority secret key, and is designed as data that is protected from falsification.

As shown in Fig. 3, the server certificate (Server Certificate) includes the following data:
(1) type information;
(2) a server ID;
(3) a server public key (Server Public Key);
(4) reading/writing restriction information (PAD Read/PAD Write) about the blocks in the protected area in the medium (memory card);
(5) other information; and
(6) a signature (Signature).

The above data (1) through (6) are described below.

### (1) Type information

The type information is information indicating the type of the certificate and the type of the content server, and stores data indicating that this certificate is a server certificate, and information indicating the type of the server such as a music content providing server or a movie content providing server.

### (2) Server ID

The server ID is an area where a server ID as server identification information is recorded.

### (3) Server public key (Server Public Key)

The server public key (Server Public Key) is the public key of the server. The server public key and a server secret key provided to the server form a key pair compliant to a public key cryptosystem.

### (4) Reading/writing restriction information (PAD Read/PAD Write) about the blocks in the protected area in the medium (memory card)

The reading/writing restriction information (PAD Read/PAD Write) for the medium contains access permission/prohibition information about the medium storing the content, such as the blocks in the protected area (Protected Area) 21 set in the storage area of the memory card 20 shown in Fig. 2.

That is, the reading/writing restriction information contains information about the blocks in which data reading (Read) and writing (Write) are allowed. The blocks in the protected area (Protected Area) 21 of the memory card are also called PAD blocks.

The memory card refers to this record field in the server certificate of Fig. 3 received in the stage of the authentication process from the server, for example, performs writing in blocks (areas #0,#1,#2, ..., in the drawing) in the protected area (Protected Area) 21 shown in Fig. 2, for example, performs a reading permission determination process, and allows execution of only the permitted process in the permitted sectioned areas.

As shown in Fig. 3, in addition to the above described data, the server certificate (Server Cert) stores (5) other information, and further stores (6) the signature (Signature) generated for the data (1) through (5) with the secret key of the certificate authority. With this signature, a falsification preventing mechanism is realized.

In a case where the server certificate (Server Cert) is used, signature verification is conducted to check the validity of the server certificate (Server Cert) prior to use. The signature verification is conducted by using a public key of the certificate authority.

Other than the server requesting access to the protected area of the memory card, an apparatus such as a recording apparatus or a reproducing apparatus also stores a host public key, holds a host certificate storing the reading/writing restriction information (PAD Read/PAD Write) for the media shown in (4) in Fig. 3, and presents this host certificate to the memory card.

The memory card conducts signature verification on the certificate presented by the apparatus requesting access, confirms the validity of the certificate, then refers to the record of the reading/writing restriction information (PAD Read/PAD Write) in the certificate, performs writing on blocks (areas #0, #1, #2, ... in the drawing) that are the sectioned areas in the protected area (Protected Area) 21 shown in Fig. 2, performs a reading permission determination process, and allows execution of only the permitted process in the permitted block areas.

As described above, the reading/writing restriction information (PAD Read/PAD Write) for the media is set for each apparatus to make access, such as each content server or each recording/reproducing apparatus (host). These pieces of information are recorded in the server certificates (Server Cert) or the host certificates (Host Cert) corresponding to respective apparatuses.

In accordance with the predetermined program stored beforehand in the memory card 20, the memory card 20 performs a process to verify recorded data in a server certificate (Server Cert) or a host certificate (Host Cert), and allows access only in access allowed areas.

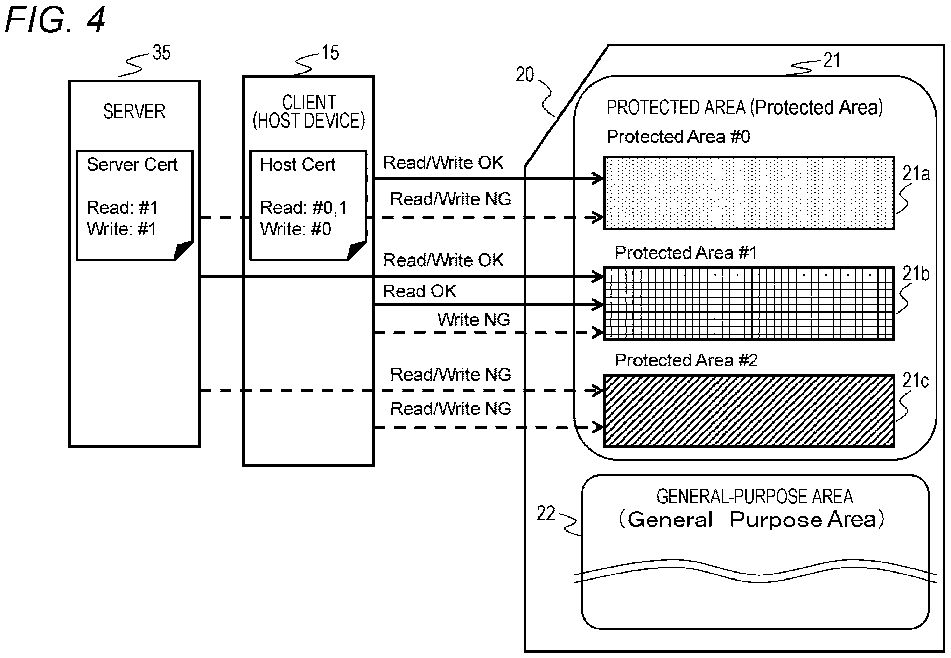

Referring now to Fig. 4, example settings of access restrictions in respective cases where the access requesting apparatus to the memory card is a server and where the apparatus is a host device such as a recording/reproducing apparatus are described.

Fig. 4 shows, from left, a server 35 that is an access requesting apparatus to the memory card, a client (a host device) 15, and the memory card 20.

The server 35 is a server that performs a content providing process, and a process to write the encryption key to be used in content decryption, for example.

The server 35 may be a content server equivalent to the content providing apparatus 32 shown in Fig. 1, or a content correspondence information providing server equivalent to the content correspondence information providing apparatus, for example.

The client (host device) 15 is an apparatus that performs a process to reproduce content stored in the memory card 20, and needs to acquire the encryption key recorded in the memory card to perform a content decryption process.

The memory card 20 includes the protected area (Protected Area) 21 and the general-purpose area (General Purpose Area) 22, and encrypted content and the like are recorded in the general-purpose area (General Purpose Area) 22.

The encryption key to be used in decrypting encrypted content is recorded in the protected area (Protected Area) 21.

As described above with reference to Fig. 2, the protected area (Protected Area) 21 is divided into blocks (PAD blocks) .

The example shown in Fig. 4 has the three blocks of a block #0 (Protected Area #0) 21a, a block #1 (Protected Area #1) 21b, and a block #2 (Protected Area #2) 21c.

In the stage of this authentication process on the access requesting apparatus, the memory card 20 receives an apparatus certificate (a server certificate (Server Cert), for example) such as a public key certificate from the apparatus on the other end or the access requesting apparatus, and determines whether to allow access to the respective blocks in the protected area (Protected Area) 21, using the information written in the certificate. As a result of this determination process, only the permitted process is performed in the permitted blocks.

For example, writing allowed area information (PAD Write) recorded in the server certificate (Server Certificate) of the server is designed as a certificate in which permission of writing (Write) in the PAD block #1 (Protected Area #1) 21b is set. That is, as shown in the drawing, the settings shown below are designed.
Reading (Read) allowed area: block #1
Writing (Write) allowed area: block #1

In the example shown in the drawing, reading (Read) is also allowed in a writing (Write) allowed block.

The host certificate (Host Certificate) held by the client (host device) 15 as a reproducing apparatus that reads an encryption key recorded in the block #1 (Protected Area #1) 21b and performs content reproduction is a certificate with settings shown below.
Permission of reading (Read) and writing (Write) in the block #0 (Protected Area #0) 21a
Permission of reading (Read) in the block #1 (Protected Area #1) 21b

Such permission information is set in this certificate.

That is, as shown in the drawing, this certificate has the settings shown below.
Reading (Read) allowed areas: blocks #0 and #1
Writing (Write) allowed area: block #0

In the host certificate (Host Certificate), permission of writing (Write) in the block #1 (Protected Area #1) 21b in the protected area is not set.

However, permission of a deletion process may be set so that the encryption key corresponding to the content to be deleted can be deleted when the content is deleted.

The block #2 (Protected Area #2) 21c in the protected area is set as an area where access from both the server and the host is not allowed, or an external access prohibited area.

That is, the block #2 (Protected Area #2) 21c is set as an area to be accessed (for data writing and reading) by the data processing unit in the memory card 20 only when data processing is performed inside the memory card 20.

As described above, the data processing unit of the memory card determines whether to allow an access requesting apparatus to perform data writing and data reading on the protected area (Protected Area) 21 on a block basis in accordance with the apparatus certificate.

### [3. Example data structure of a revocation list]

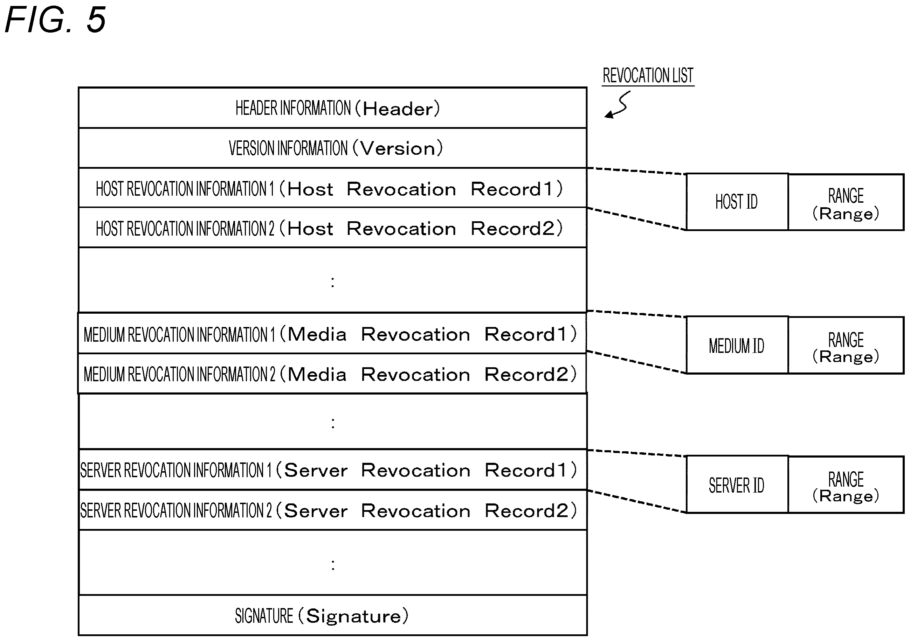

Referring now to Fig. 5, an example data structure of a revocation list is described.

As described above, a revocation list (Revocation List) is a list in which device identifiers (IDs) of information processing apparatuses such as recording/reproducing apparatuses, information storage devices such as memory cards, servers, and the like, which have been determined to be unauthorized devices, are registered. Specifically, the revocation list is designed as a list in which the identifiers (IDs) or the like of the public key certificates (Certificates) stored in unauthorized devices are registered, for example. The revocation list (Revocation List) is a list that is issued and is updated by the license managing apparatus (LA) as needed, and has a signature of the license managing apparatus set therein so that falsification can be detected.

The latest version of the revocation list that is issued and is updated by the license managing apparatus (LA) as needed is stored in the revocation list providing server forming the revocation list providing apparatus 34 shown in Fig. 1, and is provided from the revocation list providing server to respective user devices (such as the information processing apparatus 10 and the memory card 20).

The structure of the revocation list shown in Fig. 5 is described.

As shown in Fig. 5, the pieces of data listed below, for example, are recorded in the revocation list:
header information (Header),
version information (Version),
host revocation information (Host Revocation Record)
medium revocation information (Media Revocation Record),
server revocation information (Server Revocation Record), and
a signature (Signature). These pieces of information are recorded.

Identification information or the like indicating that this list is a revocation list is recorded in the header information (Header).

The version information (Version) indicates the version of the revocation list. For example, the version information is set in the form of a version number, such as Ver. 001, Ver. 002, Ver. 003, or the like, which is incremented every time a new version of the revocation list is issued.

At a time of an authentication process between devices, for example, the versions of the revocation lists held by the two devices are compared. The version of the revocation list stored in its own device is compared with the version of the revocation list in the other device being subjected to the authentication process, and, if it is determined that the other device holds a list with a larger version number, an update process is performed to replace the list of its own device with an input list.

In this update process, the respective user devices (the information processing apparatus 10 and the memory card 20) shown in Fig. 1 acquire the latest version of the revocation list from the revocation list providing server forming the revocation list providing apparatus 34 shown in Fig. 1.

In the revocation list shown in Fig. 5, the host revocation information (Host Revocation Record) is a data area in which the identifiers (IDs) of hosts determined to be unauthorized devices are recorded. Here, a host (Host) is a device that performs a content reproducing process or a recording process (an information processing apparatus), or recording/reproducing software (an application). The identifiers (IDs) of devices or applications, or the identifiers (IDs) of the public key certificates corresponding to such devices or applications are registered.

This host revocation information (Host Revocation Record) is referred to at a time of a mutual authentication process. If the host ID is recorded therein, the authentication fails, and the later process, such as content reproduction or recording, is not performed.

As shown in Fig. 5, one record (recorded data) of the host revocation information (Host Revocation Record) is formed with:
(a) the host ID of a host to be revoked (invalidated), and
(b) a range (Range).

Revocation information about more than one host ID can be collectively recorded in this one record.

All the hosts existing in the range specified in (b) from the host ID recorded in (a) are to be revoked (invalidated) .

In a case where 021001 is set as the host ID in (a), and 250 is set as the range in (b), for example, the 250 hosts with the host IDs 021001 through 021250 are to be revoked.

In the medium revocation information (Media Revocation Record), the identifiers (IDs) of media determined to be unauthorized devices, such as information storage devices (apparatuses) like memory cards and software (applications), are recorded. Here, the identifiers (IDs) of devices or applications, or the identifiers (IDs) of the public key certificates corresponding to such devices or applications are registered.

In the server revocation information (Server Revocation Record), the identifiers (IDs) of unauthorized servers determined to be unauthorized devices, such as the servers forming the content usage managing apparatus 31, the content providing apparatus 32, and the content correspondence information providing apparatus 33 shown in Fig. 1, are recorded. Here, the identifiers (IDs) of server devices or applications to be executed by servers, or the identifiers (IDs) of the public key certificates corresponding to such devices or applications are registered.

The signature (Signature) is a digital signature with a secret key of the license managing apparatus (LA) that is the issuer of the revocation list. The signature is put to guarantee the data in the revocation list.

In a case where the revocation list is used, the digital signature with the secret key of the license managing apparatus is verified, a check is made to determine that the revocation list is not falsified, and after no falsification is detected, the registered information is checked.

### [4. Example process to update the revocation list in a process to record content into a memory card]

The following is a description of an example process to update the revocation list in a memory card attached to an information processing apparatus in a case where the information processing apparatus as a user device records encrypted content, an encryption key (title key), and the like into the memory card.

Specifically, when the revocation list held by the memory card is determined to be older than the revocation list held by the content correspondence information providing server providing the encryption key (title key) during the authentication process between the devices, the memory card acquires a new version of the revocation list to replace the old version of the revocation list stored in the storage unit in the memory card.

Two example processes to be performed in a case where content is downloaded from a content server and is recorded into a memory card, and in a case where content is read from a disk such as a DVD or a BD attached to an information processing apparatus and is copied into a memory card are described below in this order.

### [4-1. Example process to update the revocation list in a content download process]

An example process to update the revocation list stored in a memory card attached to an information processing apparatus when the information processing apparatus as a user device records downloaded encrypted content and the encryption key (title key) to be used in decrypting the encrypted content into the memory card is first described with reference to Fig. 5.

Fig. 5 shows the respective structures listed below and the process:
(a) an information processing apparatus (client) 100;
(b) a memory card (information storage device) 120;
(c) a content usage managing server 130;
(d) a content server 140;
(e) a content correspondence information providing server 150, and
(f) a revocation list providing server 160

The correspondence with the respective structures shown in Fig. 1 are as follows.
(a) The information processing apparatus (client) 100 corresponds to the information processing apparatus 10 of Fig. 1.
(b) The memory card (information storage device) 120 corresponds to the memory card 20 shown in Fig. 1.
(c) The content usage managing server 130 corresponds to the content usage managing apparatus 31 shown in Fig. 1.
(d) The content server 140 corresponds to the content providing apparatus 32 shown in Fig. 1.
(e) The content correspondence information providing server 150 corresponds to the content correspondence information providing apparatus 33 shown in Fig. 1.
(f) The revocation list providing server 160 corresponds to the revocation list providing apparatus 34 shown in Fig. 1.

A disk 110 shown in the drawing is a disk attached to the information processing apparatus (client) 100.

The information processing apparatus (client) 100 has the memory card (information storage device) 120 attached thereto, and records encrypted content and an encryption key into the memory card (information storage device) 120.

As described above with reference to Figs. 2 through 4, the memory card (information storage device) 120 includes the protected area (Protected Area) 21 on which an access restriction is put so that access is allowed in accordance with access allowance information recorded in a certificate, and the general-purpose area (General Purpose Area) 22 on which no such access restrictions are put. Encrypted content and the like are recorded into the general-purpose area (General Purpose Area) 22. The encryption key (title key) to be used in decrypting encrypted content is recorded in the protected area (Protected Area) 21.

Fig. 5 is a diagram for explaining a process to record encrypted content provided by the content server 140 and content correspondence information including an encryption key (a title key) provided by the content correspondence information providing server 150 into the memory card 120.

Data that are eventually recorded is shown in the memory card 120 in Fig. 5.

The recorded data is encrypted content 121 and content correspondence information (a title key and the like) 122.

A sequence for acquiring and recording these pieces of data is now described.

First, to acquire content, the information processing apparatus (client) 100 having the memory card 120 attached thereto issues a content usage request to the content usage managing server 130.

This is a content usage request process in step S101 shown in Fig. 5.

This content usage request process is performed via a web page that is made open to public on the Internet by a service provider that is the operator of the content usage managing server 130, for example.

This content usage request process may be performed in various modes. For example, a code (a coupon code) provided from the web page or a token 151 including a code stored in a content recording disk 110 is generated, and a token 152 is transmitted to the content usage managing server 130. Through such a process, content associated with particular content such as content stored in the disk 110 can be acquired.

Having received the content usage request, the content usage managing server 130 performs an authentication process on the information processing apparatus (client) 100, conducts verification of the received token on condition of successful authentication in step S102, selects available content based on the token, acquires content information (Offer) from the content information database 131, and transmits the content information (Offer) to the information processing apparatus (client) 100.

The content information (Offer) contains the following information:
(a) an offer index: identification information about the request from the client;
(b) a protection type: information indicating the copyright protection level of the content;
(c) a content profile: the attribute of the content, such as mp4 or TS; and
(d) a file size: the file size of the content.

For example, these pieces of content information are provided from the content usage managing server 130 to the information processing apparatus (client) 100.

These pieces of content information are associated with one set of content corresponding to one title. In a case where content information about more than one piece of content corresponding to more than one title is provided, the same number of sets of content information as the number of pieces of content are provided from the content usage managing server 130 to the information processing apparatus (client) 100.

The information processing apparatus 100 further acquires encrypted content, and acquires the title key corresponding to the encrypted content.

The content correspondence information providing server 150 shown in Fig. 5 accesses the memory card 120, and writes the title key thereinto.

After receiving the content information in step S103 in Fig. 5, the information processing apparatus 100 determines the content to be acquired in accordance with the content information in step S104. In a case where content information corresponding to pieces of content is received, for example, the content to be actually acquired is selected from among the pieces of content.

In step S105, the information processing apparatus 100 requests content usage permission information (Credential) accompanied by the identifier of the selected content. That is, the "content usage permission information request 154" shown in the drawing is transmitted to the content usage managing server 130.

Upon receipt of the "content usage permission information request 154" from the information processing apparatus (client) 100, the content usage managing server 130 in step S106 performs a content usage permission process to generate and transmit "content usage permission information (Credential)155" to the information processing apparatus (client) 100.

The "content usage permission information (Credential) 155" is data formed with access information (such as a content URL (Uniform Resource Locator)) for acquiring encrypted content, access information (such as a content correspondence information URL) about the content correspondence information such as the title key, a random number generated by the content usage managing server 130, and the like.

In this content usage permission process in step S106, the content usage managing server 130 transmits the data 156 shown in the drawing to the content correspondence information providing server 150 that transmits the title key and the like.

The data 156 contains the following pieces of data:
(a) "content usage permission information (Credential)", which is the same data as the "content usage permission information (Credential) 155" transmitted to the information processing apparatus (client) 100; and
(b) the title key or the title key identifier.

The data 156 containing these pieces of data is transmitted to the content correspondence information providing server 150 that transmits the content correspondence information formed with the title key and the like.

The above (b) the title key or the title key identifier is the title key or the identifier thereof that can be used in decrypting the content selected in step S104 by the information processing apparatus (client) 100.

In a case where the content correspondence information providing server 150 holds the title key, the title key identifier is provided to the content correspondence information providing server 150.

After receiving the content usage permission information (Credential) from the content usage managing server 130 in step S107, the information processing apparatus (client) 100 acquires or downloads the content from the content server 140 in step S111. The content is encrypted content that can be decrypted with the title key corresponding to the content.

The access information such as the URL of encrypted content 141 held by the content server 140 is contained in the "content usage permission information (Credential) 155" acquired from the content usage managing server 130.

The information processing apparatus (client) 100 records the encrypted content downloaded from the content server 140 into the memory card 120 attached to the information processing apparatus (client) 100.

Here, the encrypted content is recorded into the general-purpose area (General Purpose Area) of the memory card 120. The encrypted content is encrypted content 121 shown in the drawing.

In step S121, the information processing apparatus (client) 100 transmits an acquisition request for the content correspondence information, or morespecifically, the content correspondence information containing the title key to be used in decrypting the encrypted content recorded in the memory card, the usage control information (Usage Rule File), and the like, to the content correspondence information providing server 150.

In the content correspondence information request process in step S121, the information processing apparatus (client) 100 transmits the "content usage permission information (Credential) 171" received earlier from the content usage managing server 130, to the content correspondence information providing server 150.

After receiving the acquisition request for the content correspondence information from the information processing apparatus 100 in step S122, the content correspondence information providing server 150 starts a mutual authentication process with the memory card 120 in step S123.

The memory card 120 includes the data processing unit that can perform the authentication process. In step S122, the mutual authentication process is performed between the memory card 120 and the content correspondence information providing server 150.

In this mutual authentication process, the memory card 120 and the content correspondence information providing server 150 transmit their own public key certificates to each other.

The public key certificate of the content correspondence information providing server 150 is the certificate (Certificate) that has the data structure described above with reference to Fig. 3, for example.

That is, this public key certificate is a certificate in which the access right information about each block in the protected area (Protected Area) of the memory card 120 is recorded.

Further, the content correspondence information providing server 150 notifies the information processing apparatus 100 having the memory card 120 attached thereto of a session ID that is the identifier of the communication session with the memory card, and a revocation list URL that is the access information about the latest version of the revocation list, with the latest revocation list being available with the revocation list URL. These pieces of information are the "session ID and revocation list URL 172" shown in the drawing.

The revocation list URL is the access information about the revocation list 161 held by the revocation list providing server 160. Using the revocation list URL received from the content correspondence information providing server 150, the information processing apparatus 100 can acquire (download) the revocation list 161 held by the revocation list providing server 160.

However, this revocation list download process is performed only when the revocation list held by the memory card 120 is determined to be an older version than the revocation list held by the content correspondence information providing server 150 during the authentication process between the memory card 120 and the content correspondence information providing server 150 in step S123.

In a case where the revocation list held by the memory card 120 is determined to be an older version than the revocation list held by the content correspondence information providing server 150, the information processing apparatus 100 downloads the revocation list in step S124.

This revocation list download process is performed with the use of the revocation list URL received from the content correspondence information providing server 150. The revocation list URL is the access information about the revocation list 161 held by the revocation list providing server 160.

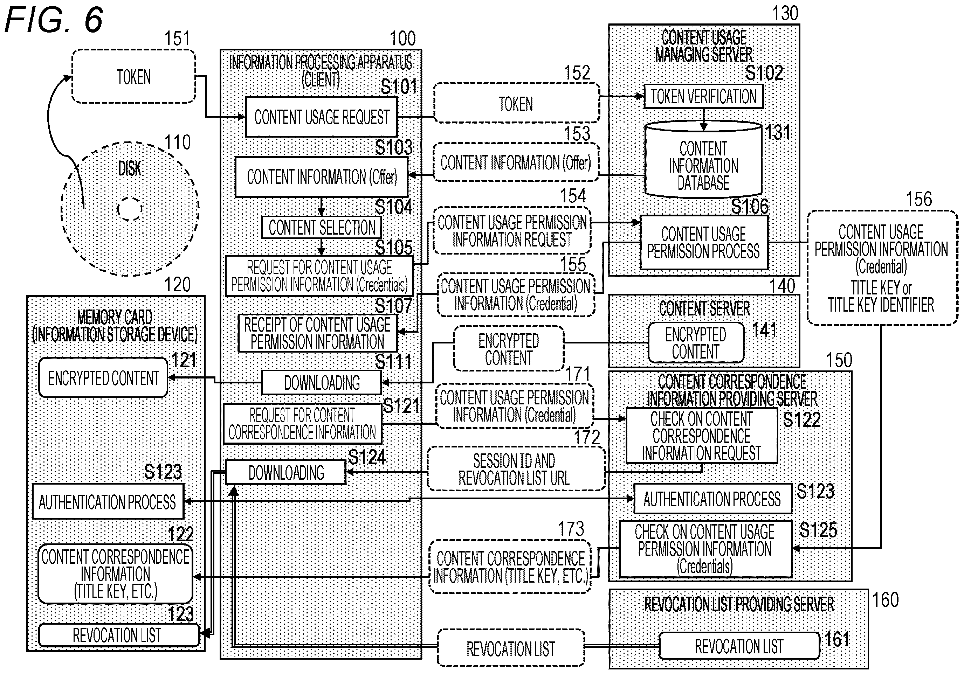

The revocation list downloaded in step S124 replaces the old version of the revocation list stored in the memory card 120, and is recorded into the memory card 120. This is the revocation list 123 shown in the memory card 120 in Fig. 6.

After the authentication process is successfully completed in step S123, the content correspondence information providing server 150 in step S125 performs a process to check the "content usage permission information (Credential) 171" received from the information processing apparatus (client) 100.

This check process is a matching process between the "content usage permission information(Credential) 171" received from the information processing apparatus (client) 100 and the "content usage permission information (Credential) " contained in the data 156 received earlier from the content usage managing server 130.

If these two sets of "content usage permission information (Credential) "are determined to be identical, the matching is determined to be successful, and the next process, which is the process to write the content correspondence information containing the title key into the memory card 120, is performed.

If these two sets of "content usage permission information (Credential) "are determined not to be identical, the matching is determined not to be successful, and the next process, which is the process to write the content correspondence information containing the title key into the memory card 120, is not performed.

In a case where the two sets of "content usage permission information (Credential) "are determined to be identical, and the matching is determined to be successful, the content correspondence information providing server 150 performs the process to write "content correspondence information 173" containing the title key into the memory card 120, which is attached to the information processing apparatus (client) 100 and has been authenticated earlier.

The title key writing process is performed on a specific block (PAD block) in the protected area (Protected Area) of the memory card 120.

As described above with reference to Fig. 6, the access right information about the respective blocks in the protected area (Protected Area) of the memory card 120 is recorded in the certificate (Certificate) of each server.

In the earlier authentication process, the control unit or the data processing unit of the memory card 120 checks the server certificate received from the content correspondence information providing server 150.

That is, a check is made to determine whether the block into which the title key is to be written is a data writing allowed block for the content correspondence information providing server 150.

The memory card 120 determines whether the block into which the title key is to be written is recorded as a data writing allowed block for the content correspondence information providing server 150 in the server certificate. Only when this determination result is positive, can the content correspondence information providing server 150 write the title key into the block.

That is, to write the title key for decrypting the encrypted content recorded in the memory card into the protected area (Protected Area) of the memory card, the conditions listed below need to be satisfied.
(1) The authentication process between the content correspondence information providing server 150 and the memory card 120 is successful.
(2) In the content correspondence information providing server 150, matching among the content usage permission information (Credential) received from the content usage managing server 130, the content usage permission information (Credential) received from the information processing apparatus (client) 100, and the content usage permission information (Credential) is confirmed.
(3) The block into which the title key is to be written is recorded as a data writing allowed block in the server certificate (Certificate) of the content correspondence information providing server 150.

Only when all of these conditions are determined to be satisfied, can the title key be written into the specific block in the protected area (Protected Area) of the memory card.

### [4-2. Example process to update the revocation list in a content copy process]

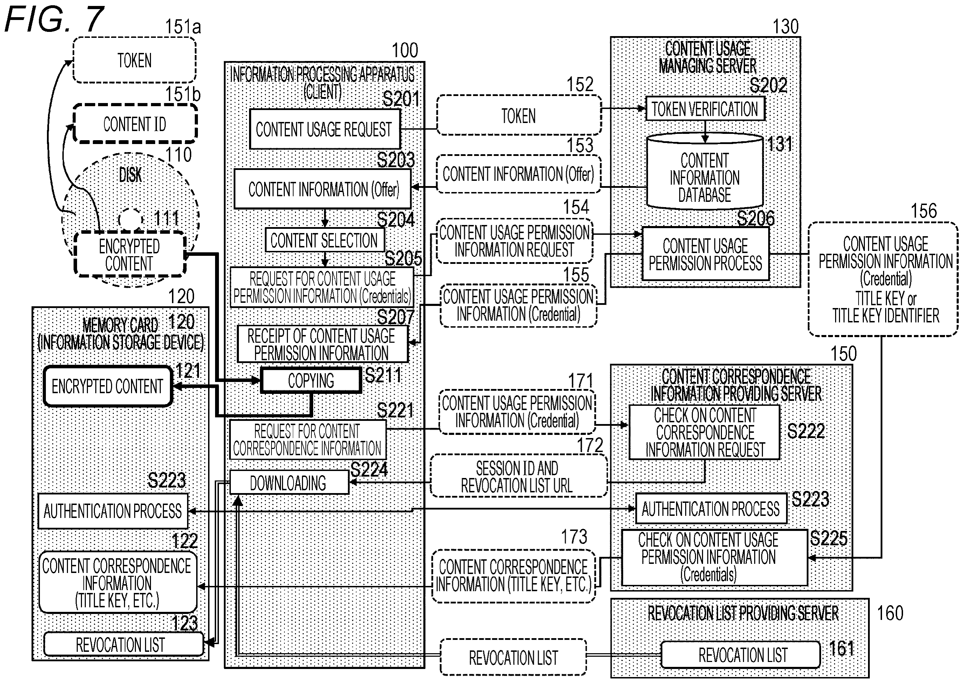

Next, an example process to update the revocation list stored in the memory card when a process to read content recorded in the disk 110 such as a BD or a DVD attached to the information processing apparatus (client) 100 and record the content into the memory card 120 or a process to perform a content copy recording process is performed, is described with reference to Fig. 7.

Fig. 7 shows the respective structures listed below and the process.
(a) The information processing apparatus (client) 100
(b) The memory card (information storage device) 120
(c) The content usage managing server 130
(d) The content correspondence information providing server 150
(e) The revocation list providing server 160

The content server 140 shown in Fig. 6 is not shown.

In this example, encrypted content 111 stored in the disk 110 attached to the information processing apparatus (client) 100 is read and is recorded into the memory card 120.

The other procedures are similar to the procedures described above with reference to Fig. 5. For example, the content correspondence information containing the title key to be used in decrypting the encrypted content 111 is acquired from the content correspondence information providing server 150.

As described above with reference to Figs. 2 through 4, the memory card (information storage device) 120 includes the protected area (Protected Area) 21 on which an access restriction is put so that access is allowed in accordance with access allowance information recorded in a certificate (Certificate), and the general-purpose area (General Purpose Area) 22 on which no such access restrictions are put. Encrypted content and the like are recorded into the general-purpose area (General Purpose Area) 22. The encryption key to be used in decrypting encrypted content is recorded in the protected area (Protected Area) 21.

The sequence in a content copy process is now described.

The differences between the content copy sequence shown in Fig. 7 and the content download sequence shown in Fig. 5 are the portions shown with heavy lines in Fig. 7.

A first difference lies in that the information processing apparatus (client) 100 reads a content ID from the disk 110 and transmits the content ID to the content usage managing server 130.

This is a process for transmitting the information for identifying the content to be copied.

Another difference lies in that the information processing apparatus (client) 100 reads the encrypted content 111 from the disk 110, and, in step S211, performs a copy process to write the encrypted content 111 into the memory card 120.

The rest of the process flow is substantially the same as the process flow described above with reference to Fig. 6.

The process flow shown in Fig. 7 is as follows.

### (Step S201)

First, to acquire content, the information processing apparatus (client) 100 having the disk 110 and the memory card 120 attached thereto issues a content usage request to the content usage managing server 130. In issuing this request, the information processing apparatus (client) 100 generates a token 151a based on the data read from the disk 110, further reads a content ID 151b, and transmits the token 151a and the content ID 151b to the content usage managing server 130.

### (Step S202)

Having received the content usage request, the content usage managing server 130 performs an authentication process on the information processing apparatus (client) 100, conducts verification of the received token on condition of successful authentication, identifies the content to be copied based on the received content ID, acquires content information (Offer) corresponding to the identified content from the content information database 131, and transmits the content information (Offer) to the information processing apparatus (client) 100.

### (Steps S203 and S204)

After receiving the content information in step S203, the information processing apparatus 100 determines the content to be copied in accordance with the content information in step S204. In a case where content information corresponding to pieces of content is received, for example, the content to be actually copied is selected from among the pieces of content.

### (Step S205)

The information processing apparatus 100 then requests content usage permission information (Credential) accompanied by the identifier of the selected content. That is, the "content usage permission information request 154" shown in the drawing is transmitted to the content usage managing server 130.

### (Step S206)

Upon receipt of the "content usage permission information request 154" from the information processing apparatus (client) 100, the content usage managing server 130 performs a content usage permission process to generate and transmit "content usage permission information (Credential)155" to the information processing apparatus (client) 100.

As described above, the "content usage permission information (Credential) 155" is data formed with information about access to the content, access information such as the URL of the content correspondence information such as the title key, a random number generated by the content usage managing server 130, and the like.

In this content usage permission process in step S206, the content usage managing server 130 transmits the data 156 shown in the drawing to the content correspondence information providing server 150 that transmits the title key and the like.

The data 156 contains the following pieces of data:
(a) "content usage permission information (Credential)", which is the same data as the "content usage permission information (Credential) 155" transmitted to the information processing apparatus (client) 100; and
(b) the title key or the title key identifier.

The data 156 containing these pieces of data is transmitted to the content correspondence information providing server 150 that transmits the title key and the like.

### (Step S207)

The information processing apparatus (client) 100 receives the content usage permission information (Credential) from the content usage managing server 130.

### (Step S211)

The information processing apparatus (client) 100 reads the encrypted content 111 from the disk 110, and records (copies) the read encrypted content into the memory card 120 attached to the information processing apparatus (client) 100.

Here, the encrypted content is recorded into the general-purpose area (General Purpose Area) of the memory card 120.

### (Step S221)

The information processing apparatus (client) 100 then transmits an acquisition request for the content correspondence information, or morespecifically, the content correspondence information containing the title key to be used in decrypting the copied encrypted content, the usage control information (Usage Rule File), and the like, to the content correspondence information providing server 150.

At the time of the acquisition request for the content correspondence information, the information processing apparatus (client) 100 transmits the "content usage permission information (Credential) 171" received earlier from the content usage managing server 130, to the content correspondence information providing server 150 as shown in the drawing.

### (Steps S222 and S223)

After receiving the acquisition request for the content correspondence information from the information processing apparatus (client) 100, the content correspondence information providing server 150 starts a mutual authentication process with the memory card 120 in step S223.

Further, the content correspondence information providing server 150 notifies the information processing apparatus 100 having the memory card 120 attached thereto of a session ID that is the identifier of the communication session with the memory card, and a revocation list URL that is the access information about the latest version of the revocation list, with the latest revocation list being available with the revocation list URL. These pieces of information are the "session ID and revocation list URL 172" shown in the drawing.

The revocation list URL is the access information about the revocation list 161 held by the revocation list providing server 160. Using the revocation list URL received from the content correspondence information providing server 150, the information processing apparatus 100 can acquire (download) the revocation list 161 held by the revocation list providing server 160.

However, this revocation list download process is performed only when the revocation list held by the memory card 120 is determined to be an older version than the revocation list held by the content correspondence information providing server 150 during the authentication process between the memory card 120 and the content correspondence information providing server 150 in step S123.

### (Step S224)

In a case where the revocation list held by the memory card 120 is determined to be an older version than the revocation list held by the content correspondence information providing server 150, the information processing apparatus 100 downloads the revocation list in step S224.

This revocation list download process is performed with the use of the revocation list URL received from the content correspondence information providing server 150. The revocation list URL is the access information about the revocation list 161 held by the revocation list providing server 160.

The revocation list downloaded in step S224 replaces the old version of the revocation list stored in the memory card 120, and is recorded into the memory card 120. This is the revocation list 123 shown in the memory card 120 in Fig. 7.

### (Step S225)

After the authentication process is successfully completed, the content correspondence information providing server 150 in step S225 performs a process to check the "content usage permission information (Credential) 171" received from the information processing apparatus (client) 100.

This check process is a matching process between the "content usage permission information(Credential) 171" received from the information processing apparatus (client) 100 and the "content usage permission information (Credential) " contained in the data 156 received earlier from the content usage managing server 130.

If these two sets of "content usage permission information (Credential)" are determined to be identical, the matching is determined to be successful, and the next process, which is the process to write the content correspondence information containing the title key into the memory card 120, is performed.

If these two sets of "content usage permission information (Credential) " are determined not to be identical, the matching is determined not to be successful, and the next process, which is the process to write the content correspondence information containing the title key into the memory card 120, is not performed.

In a case where the two sets of "content usage permission information (Credential) " are determined to be identical, and the matching is determined to be successful, the content correspondence information providing server 150 performs the process to write "content correspondence information 173" containing the title key into the memory card 120, which is attached to the information processing apparatus (client) 100 and has been authenticated earlier.

The title key writing process is performed on a specific block (PAD block) in the protected area (Protected Area) of the memory card 120.

As described above with reference to Fig. 6, the access right information about the respective blocks in the protected area (Protected Area) of the memory card 120 is recorded in the certificate (Certificate) of each server.

In the earlier authentication process, the control unit or the data processing unit of the memory card 120 checks the server certificate received from the content correspondence information providing server 150.

That is, a check is made to determine whether the block into which the title key is to be written is a data writing allowed block for the content correspondence information providing server 150.

The memory card 120 determines whether the block into which the title key is to be written is recorded as a data writing allowed block for the content correspondence information providing server 150 in the server certificate. Only when this determination result is positive, can the content correspondence information providing server 150 write the title key into the block.

That is, as in the content download process described above with reference to Fig. 6, to write the title key for decrypting the encrypted content recorded in the memory card into the protected area (Protected Area) of the memory card, the conditions listed below need to be satisfied in the content copy process shown in Fig. 7.
(1) The authentication process between the content correspondence information providing server 150 and the memory card 120 is successful.
(2) In the content correspondence information providing server 150, matching among the content usage permission information (Credential) received from the content usage managing server 130, the content usage permission information (Credential) received from the information processing apparatus (client) 100, and the content usage permission information (Credential) is confirmed.
(3) The block into which the title key is to be written is recorded as a data writing allowed block in the server certificate (Certificate) of the content correspondence information providing server 150.

Only when all of these conditions are determined to be satisfied, can the title key be written into the specific block in the protected area (Protected Area) of the memory card.

### [4-3. Communication sequence among the respective components]

A content download process has been described with reference to Fig. 6, a content copy process has been described with reference to Fig. 7, and the process sequences in cases where these processes are performed have also been described.

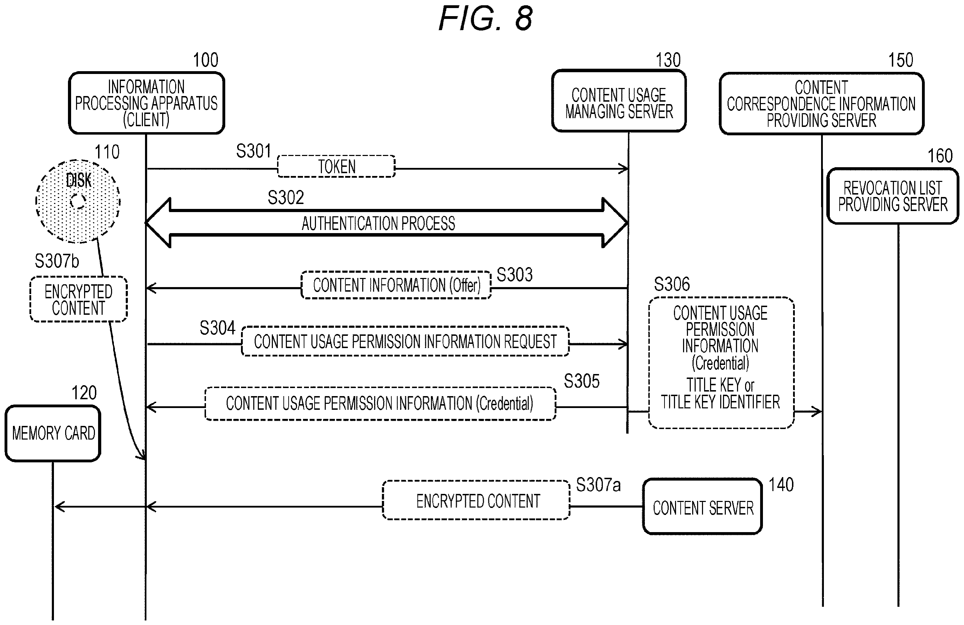

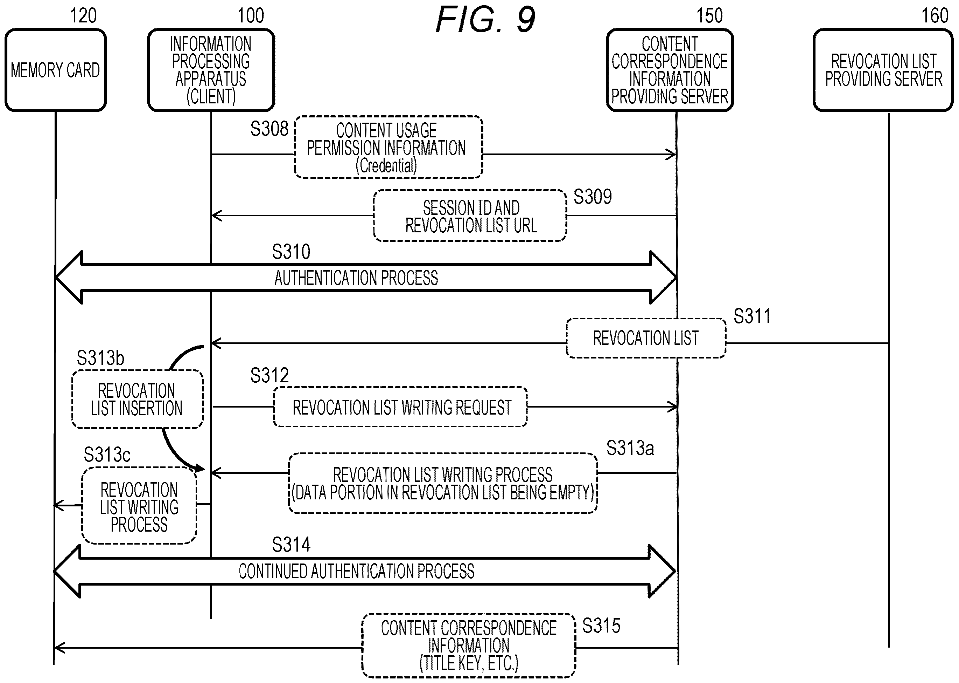

Figs. 8 and 9 are diagrams collectively showing the communication sequence to be performed among the respective components in a case where a revocation list update process is performed in conjunction with a content download process or a content copy process.

The procedures in the respective steps shown in Figs. 8 and 9 are as follows.

### (Step S301)

The information processing apparatus (client) 100 transmits a token indicating a content usage request to the content usage managing server 130.

### (Step S302)

An authentication process is performed between the information processing apparatus (client) 100 and the content usage managing server 130.

### (Step S303)

The content usage managing server 130 transmits content information (Offer) to the information processing apparatus (client) 100 on condition of successful authentication.

### (Step S304)

The information processing apparatus (client) 100 transmits a content usage permission information request to the content usage managing server 130.

### (Step S305)

The content usage managing server 130 transmits content usage permission information (Credential) to the content correspondence information providing server 150.

### (Step S306)

The content usage managing server 130 transmits the content usage permission information (Credential), and the title key or the title key identifier to the information processing apparatus (client) 100.

### (Steps S307a and S307b)

In step S307a, the information processing apparatus (client) 100 downloads content from the content server 140.

Alternatively, in step S307b, content is copied from the disk 110 and is written into the memory card 120.

The encrypted content is written into the general-purpose area (General Purpose Area) of the memory card 120.

Thereafter, the procedures in step S308 and the later steps shown in Fig. 9 are carried out.

### (Step S308)

The information processing apparatus (client) 100 transmits the content usage permission information (Credential) to the content correspondence information providing server 150.

### (Step S309)

The content correspondence information providing server 150 transmits the session ID and the revocation list URL, which is the access information about the latest revocation list, to the information processing apparatus (client) 100.

### (Step S310)

An authentication process is performed between the memory card 120 and the content correspondence information providing server 150.

### (Step S311)

Using the revocation list URL, the information processing apparatus (client) 100 acquires the revocation list from the revocation list providing server 160.

However, the procedures in steps S311 through S313 are carried out in a case where the revocation list held by the memory card 120 is an older version than the revocation list held by the content correspondence information providing server 150 during the authentication process in step S310.

### (Step S312)

The information processing apparatus (client) 100 outputs a revocation write request to the content correspondence information providing server 150.

The process to write a new version of the revocation list into the memory card is performed through the respective procedures in steps S313a through S313c described below.

### (Step S313a)

In response to the revocation write request, the content correspondence information providing server 150 performs a writing process on the memory card 120 of the revocation list.

However, this writing process is not performed as a process to perform actual writing on the revocation list, but is performed as a process to transmit no actual data of the revocation list but write data including an empty portion (dummy data of size 0 or the like) as the data portion of the revocation list, to the information processing apparatus 100.

Not involving any actual data of the revocation list, this data transmission can be performed at high speed.

### (Step S313b)

Upon receipt of the write data including an empty portion (dummy data of size 0 or the like) as the data portion of the revocation list, the information processing apparatus 100 inserts the new version of the revocation list acquired in step S311 into the empty data portion, to complete revocation list write data.

### (Step S313c)

In step S313c, the information processing apparatus 100 further performs a revocation list writing process on the memory card 120, using the revocation list write data containing the new version of the revocation list.

Here, the revocation list is written into the general-purpose area (General Purpose Area) of the memory card. For example, this process is performed as a process to write the new version of the revocation list over the old version of the revocation list.

Through these procedures, the revocation list in the memory card is updated.

### (Step S314)

During the processing period of steps S311 through S313, the mutual authentication process is continued between the memory card 120 and the content correspondence information providing server 150.

### (Step S315)

The content correspondence information providing server 150 writes the title key into the specificblock in the protected area (Protected Area) of the memory card 120 on condition of successful authentication and successful matching of the content usage permission information (Credential). Further, other content correspondence information is recorded.

Through the above sequence, the data described below is recorded into the memory card 120.

Downloaded encrypted content or copied encrypted content is recorded into the general-purpose area (General Purpose Area).

The new version of the revocation list acquired from the revocation list providing server 160 is recorded into the general-purpose area (General Purpose Area).

The title key to be used in decrypting encrypted content is recorded into a block in the protected area (ProtectedArea) .

The title key to be recorded into the block in the protected area (Protected Area) may be the data of the title key or converted data of the title key. For example, the title key may be stored as a converted title key subjected to conversion (XOR operation or encryption) with a key (a sub-key) that can be used by the information processing apparatus (client) 100.

In such a setting, the information processing apparatus (client) 100 acquires the converted title key from the block in the protected area (Protected Area), acquires the title key by performing operation or a decryption process on the converted title key, and decrypts the encrypted content by using the acquired title key.

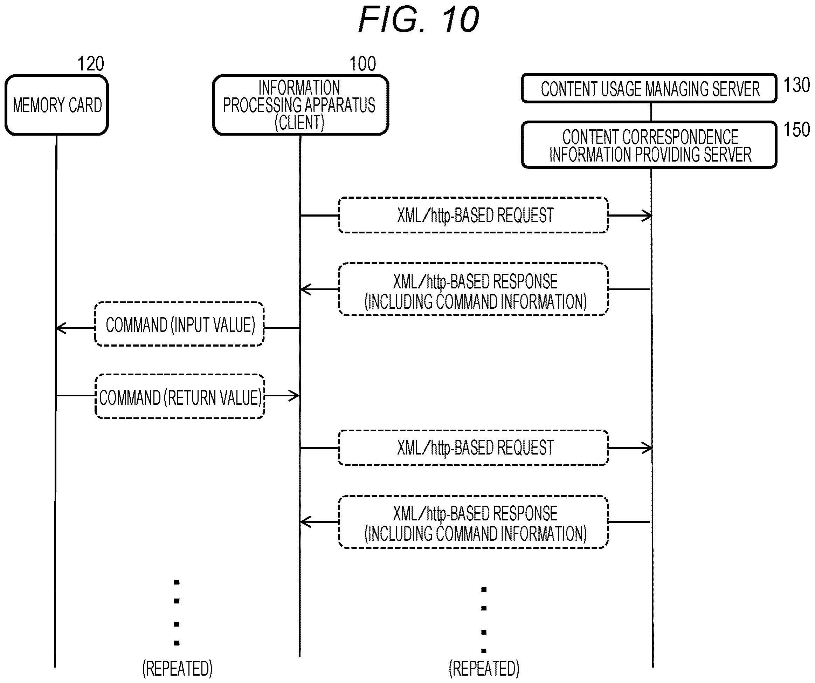

As shown in Fig. 10, communication between the information processing apparatus 100 and the content usage managing server 130 or the content correspondence information providing server 150 is performed as repetitive transmission and reception of requests and responses in XML (Extensible Markup Language)/http (Hypertext Transfer Protocol), for example.

The information processing apparatus 100 outputs a command included in a response received from the content usage managing server 130 or the content correspondence information providing server 150 to the memory card 120, and performs data writing or data reading on the memory card 120, for example. Read data is transmitted as a command return value to the content usage managing server 130 or the content correspondence information providing server 150 via the information processing apparatus 100.

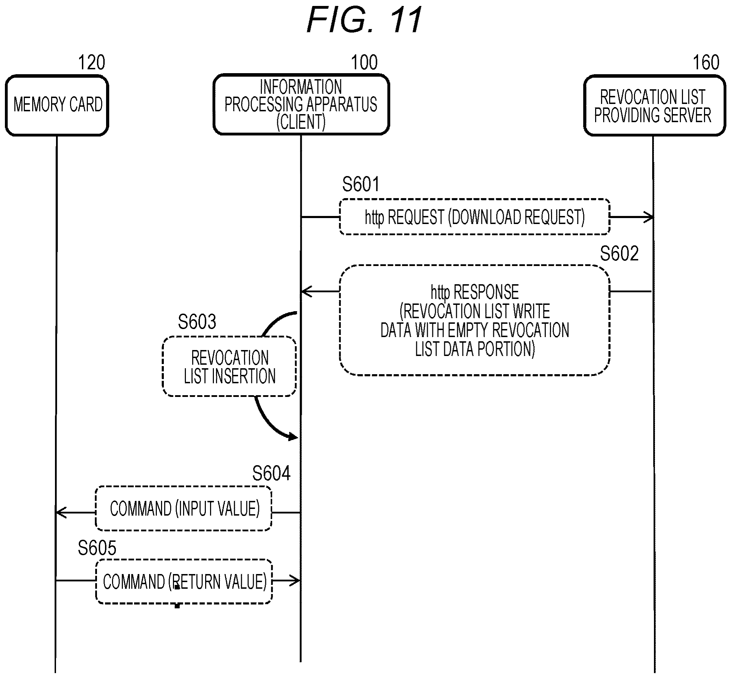

As shown in Fig. 11, communication between the information processing apparatus 100 and the revocation list providing server 160 is performed as transmission and reception of an http request and an http response, for example.

As an http request (S601) based on a revocation list URL is issued, a revocation list is acquired in an http response (S602).

The information processing apparatus 100 in step S603 writes the revocation list included in the response received from the revocation list providing server 160 into a response received from the content correspondence information providing server 150.

In step S604, the revocation list is written into the memory card 120, with the use of a command included in a response received from the content correspondence information providing server 150.

In step S605, the memory card 120 notifies the information processing apparatus 100 of a return value indicating completion of the revocation list writing.

As is apparent from the process sequence described above with reference to Figs. 8 through 9, the information processing apparatus 100 can perform a revocation list download process while the memory card 120 continues an authentication process .

If the memory card 120 is to acquire a new version of the revocation list from the content correspondence information providing server, the memory cards 120 has to suspend the authentication process at that point, and stand by until the downloading of the revocation list is completed.

With the above described process being performed, however, the memory card 120 does not have to perform a revocation list download process, and can continue the authentication process.

As a result, any process is not suspended, and the authentication process and the revocation list update process can be efficiently performed at high speed.

As for the address of the revocation list, the content correspondence information providing server 150 notifies the information processing apparatus 100 of the address in step S309.

The address of the revocation list is a revocation list URL.

The revocation list providing server to be accessed with the revocation list URL has a CDN structure including scattered cache servers (edge servers) as described above.

Accordingly, even when there is a large concentration of user access, the load can be divided among the respective servers to perform processes, and each user device can promptly acquire a revocation list.

Alternatively, the latest version of the revocation list may be stored beforehand into more than one server, and respective users may be made to sequentially access the respective servers storing the revocation list, so as to avoid a concentration of access on one server.

For example, the access information about the servers storing the latest version of the revocation list is set as follows.
Revocation list providing server 1: revocation list URL 1
Revocation list providing server 2 : revocation list URL 2
Revocation list providing server 3 : revocation list URL 3
Revocation list providing server 4 : revocation list URL 4

...

A large number of revocation list URLs are set as described above, and the content correspondence information providing server 150 sequentially notifies information processing apparatuses as user devices of the URLs shown below.
Revocation list URL 1
Revocation list URL 2
Revocation list URL 3
Revocation list URL 4
Revocation list URL 1
Revocation list URL 2

...

The above different URLs are used in a repetitive manner.

With such a setting, a concentration of access on one server can be prevented.

As described above, in a structure according to the present disclosure, the data processing unit of an information processing apparatus having a memory card or the like attached thereto performs control on updating of the revocation list to be stored into the data storage unit of the memory card. The data processing unit of the information processing apparatus acquires a revocation list URL from a server that records an encryption key or the like into the memory card, for example. With the use of the acquired revocation list URL, a revocation list is further acquired from the revocation list providing server. The acquired revocation list is further recorded into the memory card. In the recording process, a data writing process command that does not include the revocation list is input from a server, the acquired revocation list is inserted into the command, a process based on the command is performed, and the revocation list is recorded.

With these structures, the process to update the revocation list in the memory card can be performed without an increase in the load on the memory card or an increase in the load on the server that performs the recording of an encryption key and the like, and a concentration of load on the revocation list providing server is avoided. Thus, an efficient process to update the revocation list in the memory card is realized.

### [5. Example hardware configurations of respective apparatuses]

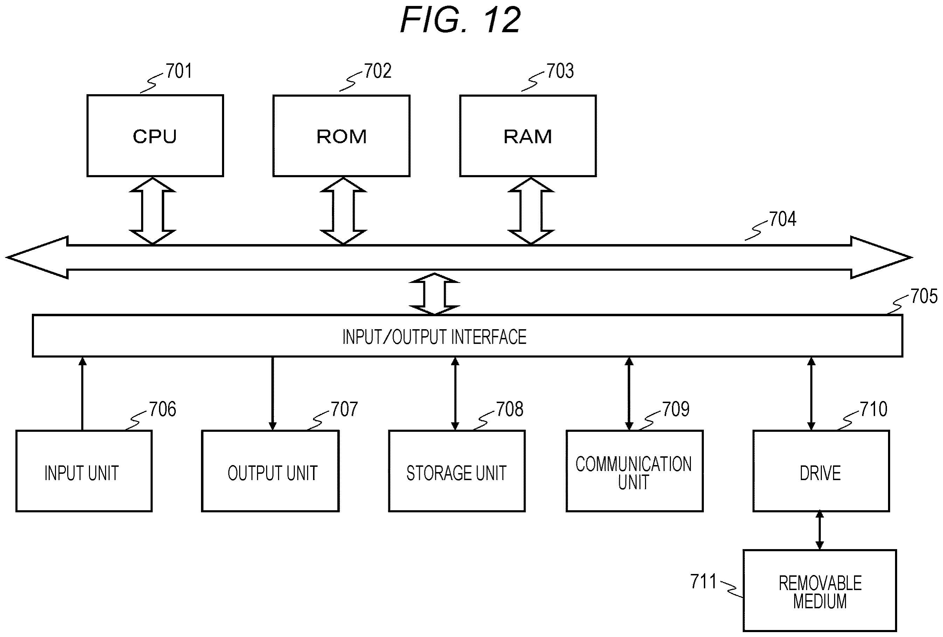

Lastly, example hardware configurations of apparatuses that perform the above described processes are described, with reference to Fig. 12 and another.

Referring to Fig. 12, an example hardware configuration of an information recording apparatus or an information reproduction apparatus as a client that is connected to a server or has a memory card attached thereto, and performs data recording or reproduction is first described.

A CPU (Central Processing Unit) 701 functions as a data processing unit that performs various kinds of processes in accordance with a program stored in a ROM (Read Only Memory) 702 or a storage unit 708. For example, the CPU 701 performs the server-client communication processes described above in the respective embodiments, a process to record received data into a memory card (a removable medium 711 in the drawing), a process to reproduce data from the memory card (the removable medium 711 in the drawing), or the like. The program to be executed by the CPU 701 and data are stored in a RAM (Random Access Memory) 703 as appropriate. The CPU 701, the ROM 702, and the RAM 703 are connected to one another by a bus 704.

The CPU 701 is connected to an input/output interface 705 via the bus 704, and an input unit 706 formed with various kinds of switches, a keyboard, a mouse, a microphone, and the like, and an output unit 707 formed with a display, a speaker, and the like are also connected to the input/output interface 705. The CPU 701 performs various kinds of processes in accordance with instructions that are input through the input unit 706, and outputs processing results to the output unit 707, for example.

The storage unit 708 connected to the input/output interface 705 is formed with a hard disk, for example, and stores the program to be executed by the CPU 701 and various kinds of data. A communication unit 709 communicates with an external device via a network such as the Internet or a local area network.

A drive 710 connected to the input/output interface 705 drives the removable medium 711 that is a magnetic disk, an optical disk, a magnetooptical disk, a semiconductor memory, or the like, and acquires various kinds of data such as recorded content, key information, and a program. For example, through data processing in accordance with an acquired program or with the use of content or key data, key generation, content encryption, recording, decryption, reproduction, or the like is performed in accordance with the data processing or recording/reproducing program being executed by the CPU.

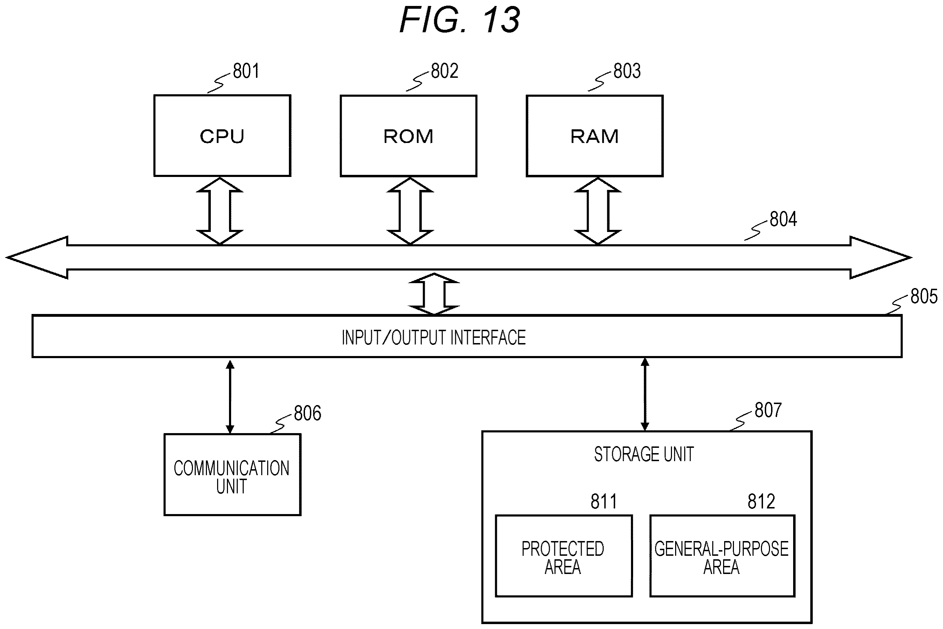

Fig. 13 shows an example hardware configuration of a memory card.

A CPU (Central Processing Unit) 801 functions as a data processing unit that performs various kinds of processes in accordance with a program stored in a ROM (Read Only Memory) 802 or a storage unit 807. For example, the CPU 801 performs the communication processes described above in the respective embodiments with a server and a host device such as a recording apparatus or a reproducing apparatus, a process to write and read data into a storage unit 807, aprocess to determine whether to allow access to respective blocks that are the sectioned areas in a protected area 811 of the storage unit 807, and the like. The program to be executed by the CPU 801 and data are stored in a RAM (Random Access Memory) 803 as appropriate. The CPU 801, the ROM 802, and the RAM 803 are connected to one another by a bus 804.

The CPU 801 is connected to an input/output interface 805 via the bus 804, and a communication unit 806 and the storage unit 807 are also connected to the input/output interface 805.

The communication unit 804 connected to the input/output interface 805 performs communication with a server and a host device, for example. The storage unit 807 is a data storage area, and includes the protected area (Protected Area) 811 on which an access restriction is put as described above, and a general-purpose area 812 where data recording and reading can be freely performed.

### [6. Summary of the structure of the present disclosure]

Embodiments of the present disclosure have been described so far by way of specific examples. However, it is obvious that those skilled in the art can make modifications to and substitutions of the embodiments without departing from the scope of the present disclosure. That is, the present invention is disclosed in the form of examples, and the above description should not be interpreted in a restrictive manner. The claims should be taken into account in understanding the subject matter of the present disclosure.

The technology disclosed in this specification may also be embodied in the structures described below.
(1) An information processing apparatus including
   a data processing unit that controls updating of a revocation list to be stored into a data storage unit attached to the information processing apparatus,
   wherein the data processing unit performs a process to
   acquire access information about the revocation list from a data recording server that performs data recording on the data storage unit,
   acquire the revocation list from a revocation list providing server, using the acquired access information, and
   record the acquired revocation list into the data storage unit.
(2) The information processing apparatus of (1), wherein the data processing unit performs a process to input a data writing process command not including a revocation list from the data recording server, insert the acquired revocation list into the command, perform a process based on the command, and record the revocation list into the data storage unit, the data writing process command being a command to write data into the data storage unit.
(3) The information processing apparatus of (1) or (2), wherein the data recording server is a content correspondence information providing server that records an encryption key into the data storage unit, the encryption key being to be used in decrypting encrypted content recorded in the data storage unit, and a server that records the encryption key into the data storage unit on condition of successful authentication between the data storage unit and the content correspondence information providing server.
(4) The information processing apparatus of any one of (1) through (3), wherein the data processing unit acquires a revocation list URL as the access information about the revocation list from the data recording server, and acquires the revocation list from the revocation list providing server by using the acquired revocation list URL.
(5) The information processing apparatus of any one of (1) through (4), wherein, when a revocation list stored in the data storage unit is determined to be an older version than a revocation list held by the data recording server, the data processing unit acquires the revocation list from the revocation list providing server.
(6) The information processing apparatus of any one of (1) through (5), wherein the data processing unit acquires the revocation list from the revocation list providing server in parallel to an authentication process between the data storage unit and the data recording server.
(7) A content correspondence information providing server that records an encryption key into an information storage device attached to an information processing apparatus, the encryption key being to be used in decrypting encrypted content recorded in the information storage device,
   the content correspondence information providing server
   transmitting access information about a revocation list to be recorded into the data storage unit, to the information processing apparatus, and
   outputting a revocation list writing process command not including actual data of the revocation list to the information storage device.
(8) The content correspondence information providing server of (7), which performs an authentication process with the information storage device, and performs a process to write the encryption key on condition of successful authentication.
(9) The content correspondence information providing server of (7) or (8), which transmits a revocation list URL as the access information about the revocation list to the information processing apparatus.
(10) The content correspondence information providing server of any one of (7) through (9), which transmits different revocation list URLs to respective information processing apparatuses.
(11) The content correspondence information providing server of (9) or (10), wherein the revocation list URL is the URL corresponding to data stored in a revocation list providing server forming a CDN (Content Delivery Network).
(12) An information processing system including:
   an information processing apparatus that uses content stored in an information storage device;
   a content usage managing server that provides content usage permission information to the information processing apparatus;
   a content correspondence information providing server that provides an encryption key to be used in decrypting encrypted content stored in the information storage device; and
   a revocation list providing server that holds a revocation list to be stored into the information storage device,
   wherein
   the information processing apparatus
   acquires the content usage permission information from the content usage managing server,
   acquires access information about the revocation list from the content correspondence information providing server,
   acquires the revocation list from the revocation list providing server by using the acquired access information, and
   records the acquired revocation list into the information storage device by using a revocation list write command output from the content correspondence information providing server.
(13) The information processing system of (12), wherein the information processing apparatus performs a process to input a data writing process command not including a revocation list from the content correspondence information providing server, insert the acquired revocation list into the command, perform a process based on the command, and record the revocation list into the information storage device.
(14) The information processing system of (12), wherein the information processing apparatus acquires a revocation list URL as the access information about the revocation list from the content correspondence information providing server, and acquires the revocation list from the revocation list providing server by using the acquired revocation list URL.

Further, methods of performing processes and programs for processes to be performed in the above described apparatuses and systems are also included in the present disclosure.

The series of processes described in this specification can be performed by hardware, software, or a combination of hardware and software . In a case where processes are performed by software, a program in which the process sequences are recorded may be installed into a memory incorporated into special-purpose hardware in a computer, or may be installed into a general-purpose computer that can perform various kinds of processes. For example, the program can be recorded beforehand into a recording medium. The program can be installed from the recording medium into a computer, or can be received via a network such as a LAN (Local Area Network) or the Internet and be installed into a recording medium such as an internal hard disk.

The respective processes described in this specification may not be performed in chronological order according to the description, but may be performed in parallel or independently of one another depending on the configuration/capability of the apparatus performing the processes or as necessary. In this specification, a system is a logical assembly of devices, and does not necessarily mean devices with different structures incorporated into one housing.

### INDUSTRIAL APPLICABILITY

As described so far, according to an embodiment of the present disclosure, a structure that can perform an efficient process to update the revocation list in a memory card is realized.

Specifically, the data processing unit of an information processing apparatus having a memory card or the like attached thereto performs control on updating of the revocation list to be stored into the data storage unit of the memory card. The data processing unit acquires a revocation list URL from a server that records an encryption key or the like into the data storage unit, for example. With the use of the acquired revocation list URL, a revocation list is further acquired from the revocation list providing server. The acquired revocation list is further recorded into the data storage unit. In the recording process, a data writing process command that does not include the revocation list is input from a server, the acquired revocation list is inserted into the command, a process based on the command is performed, and the revocation list is recorded.

With these structures, the process to update the revocation list in the memory card can be performed without an increase in the load on the memory card or an increase in the load on the server that performs the recording of an encryption key and the like, and a concentration of load on the revocation list providing server is avoided. Thus, an efficient process to update the revocation list in the memory card is realized.

### REFERENCE SIGNS LIST

- 10: Information processing apparatus
- 11: Recording/reproducing apparatus
- 12: PC
- 13: Portable terminal
- 15: Client (host device)
- 20: Memory card
- 21: Protected area
- 22: General purpose are
- 31: Content usage managing apparatus
- 32: Content providing apparatus
- 33: Content correspondence information providing apparatus
- 34: Revocation list providing apparatus
- 35: Server
- 100: Information processing apparatus (client)
- 110: Disk
- 120: Memory card (information storage device)
- 130: Content usage managing server
- 140: Content server
- 150: Content correspondence information providing server
- 160: Revocation list providing server
- 701: CPU
- 702: ROM
- 703: RAM
- 704: Bus
- 705: Input/output interface
- 706: Input unit
- 707: Output unit
- 708: Storage unit
- 709: Communication unit
- 710: Drive
- 711: Removable medium
- 801: CPU
- 802: ROM
- 803: RAM
- 804: Bus
- 805: Input/output interface
- 806: Communication unit
- 807: Storage unit
- 811: Protected area
- 812: General purpose area

## Claims

1. An information processing apparatus (10) comprising
a data processing unit configured to control updating of a revocation list (44) to be stored into a data storage unit (20) attached to the information processing apparatus,
wherein the data processing unit performs a process to
acquire access information about the revocation list (44) from a data recording server performing data recording on the data storage unit (20),
acquire the revocation list (44) from a revocation list providing server (34), using the acquired access information, and
record the acquired revocation list into the data storage unit (20),
wherein the data processing unit performs a process to input a data writing process command not including a revocation list (44) from the data recording server, insert the acquired revocation list (44) into the command, perform a process based on the command, and record the revocation list into the data storage unit (20), the data writing process command being a command to write data into the data storage unit (20).

2. The information processing apparatus according to claim 1, wherein the data recording server is
a content correspondence information providing server (33) configured to record an encryption key (43) into the data storage unit (20), the encryption key (43) being to be used in decrypting encrypted content recorded in the data storage unit (20), and
a server (35) configured to record the encryption key (43) into the data storage unit (20) on condition of successful authentication between the data storage unit (20) and the content correspondence information providing server (33).

3. The information processing apparatus according to claim 1, wherein the data processing unit
acquires a revocation list URL as the access information about the revocation list (44) from the data recording server, and
acquires the revocation list (44) from the revocation list providing server (34) by using the acquired revocation list URL.

4. The information processing apparatus according to claim 1, wherein, when a revocation list (44) stored in the data storage unit (20) is determined to be an older version than a revocation list (44) held by the data recording server (34), the data processing unit acquires the revocation list (44) from the revocation list providing server (34).

5. A content correspondence information providing server (33) that records an encryption key (43) into an information storage device (20) attached to an information processing apparatus (10), the encryption key (43) being to be used in decrypting encrypted content recorded in the information storage device (20),
the content correspondence information providing server (33) being configured to
transmit access information about a revocation list (44) to be recorded into the data storage unit (20) to the information processing apparatus (10), and
output a revocation list writing process command not including actual data of the revocation list to the information storage device (20) .

6. The content correspondence information providing server according to claim 5, which performs an authentication process with the information storage device (20), and performs a process to write the encryption key (43) on condition of successful authentication.

7. The content correspondence information providing server according to claim 5, which transmits a revocation list URL as the access information about the revocation list (44) to the information processing apparatus (10).

8. The content correspondence information providing server according to claim 5, which transmits different revocation list URLs to respective information processing apparatuses (10).

9. The content correspondence information providing server according to claim 7, wherein the revocation list URL is a URL corresponding to data stored in a revocation list providing server (34) forming a CDN (Content Delivery Network).

10. An information processing system (10) comprising:
an information processing apparatus (100) configured to use content stored in an information storage device (120);
a content usage managing server (130) configured to provide content usage permission information to the information processing apparatus (100);
a content correspondence information providing server (150) configured to provide an encryption key to be used in decrypting encrypted content stored in the information storage device (120); and
a revocation list providing server (160) holding a revocation list (161) to be stored into the information storage device (120),
wherein
the information processing apparatus (100)
acquires the content usage permission information from the content usage managing server (130),
acquires access information about the revocation list (161) from the content correspondence information providing server,
acquires the revocation list (161) from the revocation list providing server (160) by using the acquired access information, and
records the acquired revocation list (161) into the information storage device (120) by using a revocation list write command output from the content correspondence information providing server (150),
wherein the information processing apparatus (100) performs a process to input a data writing process command not including a revocation list (160) from the content correspondence information providing server (150), insert the acquired revocation list (160) into the command, perform a process based on the command, and record the revocation list (161) into the information storage device (120).

11. The information processing system according to claim 10,
wherein the information processing apparatus (100)
acquires a revocation list URL (172) as the access information about the revocation list (161) from the content correspondence information providing server (150), and
acquires the revocation list (161) from the revocation list providing server (160) by using the acquired revocation list URL (172).

12. An information processing method implemented in an information processing apparatus,
the information processing apparatus comprising
a data processing unit configured to control updating of a revocation list to be stored into a data storage unit attached to the information processing apparatus,
wherein the data processing unit performs the steps of:
acquiring access information about the revocation list from a data recording server performing data recording on the data storage unit,
acquiring the revocation list from a revocation list providing server, using the acquired access information, and
recording the acquired revocation list into the data storage unit,
wherein the method further includes:
receiving a data writing process command not including a revocation list (44) from the data recording server,
inserting the acquired revocation list (44) into the command,
performing a process based on the command, the data writing process command being a command to write data into the data storage unit (20).

13. A program for causing an information processing apparatus (10) comprising a data processing unit to perform information processing according to the method of claim 12.

## Patentansprüche

1. Informationsverarbeitungsvorrichtung (10), welche umfasst:
eine Datenverarbeitungseinheit, die dafür ausgelegt ist, das Aktualisieren einer Sperrliste (44) zu steuern, die in einer Datenspeichereinheit (20) zu speichern ist, die an die Informationsverarbeitungsvorrichtung angeschlossen ist,
wobei die Datenverarbeitungseinheit einen Prozess ausführt, um:
Zugangsinformationen über die Sperrliste (44) von einem Datenaufzeichnungsserver zu erlangen, der eine Datenaufzeichnung auf der Datenspeichereinheit (20) ausführt,
die Sperrliste (44) von einem Sperrlisten-Bereitstellungsserver (34) unter Verwendung der erlangten Zugangsinformationen zu erlangen, und
die erlangte Sperrliste in der Datenspeichereinheit (20) aufzuzeichnen,
wobei die Datenverarbeitungseinheit einen Prozess ausführt, um einen Datenschreibprozess-Befehl, der eine Sperrliste (44) nicht enthält, von dem Datenaufzeichnungsserver einzugeben, die erlangte Sperrliste (44) in den Befehl einzufügen, einen Prozess basierend auf dem Befehl auszuführen und die Sperrliste in der Datenspeichereinheit (20) aufzuzeichnen, wobei der Datenschreibprozess-Befehl ein Befehl zum Schreiben von Daten in die Datenspeichereinheit (20) ist.

2. Informationsverarbeitungsvorrichtung nach Anspruch 1, wobei der Datenaufzeichnungsserver ist:
ein Inhaltsübereinstimmungsinformationen-Bereitstellungsserver (33), der dafür ausgelegt ist, einen Verschlüsselungsschlüssel (43) in der Datenspeichereinheit (20) aufzuzeichnen, wobei der Verschlüsselungsschlüssel (43) dazu dient, beim Entschlüsseln von verschlüsseltem Inhalt verwendet zu werden, der in der Datenspeichereinheit (20) aufgezeichnet ist, und
ein Server (35), der dafür ausgelegt ist, den Verschlüsselungsschlüssel (43) in der Datenspeichereinheit (20) unter der Bedingung einer erfolgreichen Authentifizierung zwischen der Datenspeichereinheit (20) und dem Inhaltsübereinstimmungsinformationen-Bereitstellungsserver (33) aufzuzeichnen.

3. Informationsverarbeitungsvorrichtung nach Anspruch 1, wobei die Datenverarbeitungseinheit einen Sperrlisten-URL als die Zugangsinformationen über die Sperrliste (44) von dem Datenaufzeichnungsserver erlangt, und
die Sperrliste (44) von dem Sperrlisten-Bereitstellungsserver (34) unter Verwendung des erlangten Sperrlisten-URL erlangt.

4. Informationsverarbeitungsvorrichtung nach Anspruch 1, wobei, wenn bestimmt wird, dass eine in der Datenspeichereinheit (20) gespeicherte Sperrliste (44) eine ältere Version ist als eine Sperrliste (44), die in dem Datenaufzeichnungsserver (34) enthalten ist, die Datenverarbeitungseinheit die Sperrliste (44) von dem Sperrlisten-Bereitstellungsserver (34) erlangt.

5. Inhaltsübereinstimmungsinformationen-Bereitstellungsserver (33), welcher einen Verschlüsselungsschlüssel (43) in einer Informationsspeichervorrichtung (20) aufzeichnet,
die an eine Informationsverarbeitungsvorrichtung (10) angeschlossen ist, wobei der Verschlüsselungsschlüssel (43) dazu dient, beim Entschlüsseln von verschlüsseltem Inhalt verwendet zu werden, der in der Informationsspeichervorrichtung (20) aufgezeichnet ist,
wobei der Inhaltsübereinstimmungsinformationen-Bereitstellungsserver (33) dafür ausgelegt ist, Zugangsinformationen über eine Sperrliste (44), die in der in der Datenspeichereinheit (20) aufzuzeichnen ist, zu der Informationsverarbeitungsvorrichtung (10) zu übertragen, und
einen Sperrlistenschreibprozess-Befehl, welcher eigentliche Daten der Sperrliste nicht enthält, an die Informationsspeichervorrichtung (20) auszugeben.

6. Inhaltsübereinstimmungsinformationen-Bereitstellungsserver nach Anspruch 5, welcher einen Authentifizierungsprozess mit der Informationsspeichervorrichtung (20) ausführt und unter der Bedingung einer erfolgreichen Authentifizierung einen Prozess zum Schreiben des Verschlüsselungsschlüssels (43) ausführt.

7. Inhaltsübereinstimmungsinformationen-Bereitstellungsserver nach Anspruch 5, welcher einen Sperrlisten-URL als die Zugangsinformationen über die Sperrliste (44) zu der Informationsverarbeitungsvorrichtung (10) überträgt.

8. Inhaltsübereinstimmungsinformationen-Bereitstellungsserver nach Anspruch 5, welcher verschiedene Sperrlisten-URLs zu jeweiligen Informationsverarbeitungsvorrichtungen (10) überträgt.

9. Inhaltsübereinstimmungsinformationen-Bereitstellungsserver nach Anspruch 7, wobei der Sperrlisten-URL ein URL ist, welcher Daten entspricht, die in einem Sperrlisten-Bereitstellungsserver (34) gespeichert sind, der ein CDN (Content Delivery Network) bildet.

10. Informationsverarbeitungssystem (10), welches umfasst:
eine Informationsverarbeitungsvorrichtung (100), die dafür ausgelegt ist, Inhalt zu verwenden, der in einer Informationsspeichervorrichtung (120) gespeichert ist;
einen Inhaltsverwendungs-Verwaltungsserver (130), der dafür ausgelegt ist, der Informationsverarbeitungsvorrichtung (100) Inhaltsverwendungs-Erlaubnisinformationen zu liefern;
einen Inhaltsübereinstimmungsinformationen-Bereitstellungsserver (150), der dafür ausgelegt ist, einen Verschlüsselungsschlüssel bereitzustellen, der beim Entschlüsseln von verschlüsseltem Inhalt zu verwenden ist, der in der Informationsspeichervorrichtung (120) gespeichert ist; und
einen Sperrlisten-Bereitstellungsserver (160), der eine Sperrliste (161) enthält, die in der Informationsspeichervorrichtung (120) zu speichern ist,
wobei
die Informationsverarbeitungsvorrichtung (100) die Inhaltsverwendungs-Erlaubnisinformationen von dem Inhaltsverwendungs-Verwaltungsserver (130) erlangt,
Zugangsinformationen über die Sperrliste (161) von dem Inhaltsübereinstimmungsinformationen-Bereitstellungsserver erlangt,
die Sperrliste (161) von dem Sperrlisten-Bereitstellungsserver (160) unter Verwendung der erlangten Zugangsinformationen erlangt, und
die erlangte Sperrliste (161) in der Informationsspeichervorrichtung (120) unter Verwendung eines Sperrlisten-Schreibbefehls aufzeichnet, der von dem Inhaltsübereinstimmungsinformationen-Bereitstellungsserver (150) ausgegeben wird,
wobei die Informationsverarbeitungsvorrichtung (100) einen Prozess ausführt, um einen Datenschreibprozess-Befehl, der eine Sperrliste (160) nicht enthält, von dem Inhaltsübereinstimmungsinformationen-Bereitstellungsserver (150) einzugeben, die erlangte Sperrliste (160) in den Befehl einzufügen, einen Prozess basierend auf dem Befehl auszuführen und die Sperrliste (161) in der Informationsspeichervorrichtung (120) aufzuzeichnen.

11. Informationsverarbeitungssystem nach Anspruch 10,
wobei die Informationsverarbeitungsvorrichtung (100)
einen Sperrlisten-URL (172) als die Zugangsinformationen über die Sperrliste (161) von dem Inhaltsübereinstimmungsinformationen-Bereitstellungsserver (150) erlangt, und
die Sperrliste (161) von dem Sperrlisten-Bereitstellungsserver (160) unter Verwendung des erlangten Sperrlisten-URL (172) erlangt.

12. Informationsverarbeitungsverfahren, welches in einer Informationsverarbeitungsvorrichtung implementiert ist,
wobei die Informationsverarbeitungsvorrichtung umfasst:
eine Datenverarbeitungseinheit, die dafür ausgelegt ist, das Aktualisieren einer Sperrliste zu steuern, die in einer Datenspeichereinheit zu speichern ist, die an die Informationsverarbeitungsvorrichtung angeschlossen ist,
wobei die Datenverarbeitungseinheit die Schritte ausführt:
Erlangen von Zugangsinformationen über die Sperrliste von einem Datenaufzeichnungsserver, der eine Datenaufzeichnung auf der Datenspeichereinheit ausführt,
Erlangen der Sperrliste von einem Sperrlisten-Bereitstellungsserver unter Verwendung der erlangten Zugangsinformationen, und
Aufzeichnen der erlangten Sperrliste in der Datenspeichereinheit,
wobei das Verfahren ferner beinhaltet:
Empfangen eines Datenschreibprozess-Befehls, der eine Sperrliste (44) nicht enthält, von dem Datenaufzeichnungsserver,
Einfügen der erlangten Sperrliste (44) in den Befehl,
Ausführen eines Prozesses basierend auf dem Befehl, wobei der Datenschreibprozess-Befehl ein Befehl zum Schreiben von Daten in die Datenspeichereinheit (20) ist.

13. Programm zum Veranlassen einer Informationsverarbeitungsvorrichtung (10), die eine Datenverarbeitungseinheit umfasst, eine Informationsverarbeitung gemäß dem Verfahren von Anspruch 12 durchzuführen.

## Revendications

1. Appareil de traitement d'informations (10) comprenant :
une unité de traitement de données configurée pour contrôler la mise à jour d'une liste de révocation (44) devant être stockée dans une unité de stockage de données (20) rattachée à l'appareil de traitement d'informations,
l'unité de traitement de données exécutant un processus destiné à
acquérir des informations d'accès concernant la liste de révocation (44) à partir d'un serveur d'enregistrement de données exécutant un enregistrement de données sur l'unité de stockage de données (20),
acquérir la liste de révocation (44) à partir d'un serveur de fourniture de liste de révocation (34), à l'aide des informations d'accès acquises, et
enregistrer la liste de révocation acquise dans l'unité de stockage de données (20),
l'unité de traitement de données exécutant un processus destiné à entrer une commande de processus d'écriture de données qui n'inclut pas une liste de révocation (44) à partir du serveur d'enregistrement de données, insérer la liste de révocation (44) acquise dans la commande, exécuter un processus sur la base de la commande, et enregistrer la liste de révocation dans l'unité de stockage de données (20), la commande de processus d'écriture de données étant une commande destinée à écrire des données dans l'unité de stockage de données (20).

2. Appareil de traitement d'informations selon la revendication 1, dans lequel le serveur d'enregistrement de données est
un serveur de fourniture d'informations de correspondance de contenu (33) configuré pour enregistrer une clé de cryptage (43) dans l'unité de stockage de données (20), la clé de cryptage (43) devant être utilisée pour décrypter un contenu crypté enregistré dans l'unité de stockage de données (20), et
un serveur (35) configuré pour enregistrer la clé de cryptage (43) dans l'unité de stockage de données (20) en cas de réussite de l'authentification entre l'unité de stockage de données (20) et le serveur de fourniture d'informations de correspondance de contenu (33) .

3. Appareil de traitement d'informations selon la revendication 1, dans lequel l'unité de traitement de données
acquiert un URL de liste de révocation comme les informations d'accès concernant la liste de révocation (44) à partir du serveur d'enregistrement de données, et
acquiert la liste de révocation (44) à partir du serveur de fourniture de liste de révocation (34) en utilisant l'URL de liste de révocation acquis.

4. Appareil de traitement d'informations selon la revendication 1 dans lequel, lorsqu'une liste de révocation (44) stockée dans l'unité de stockage de données (20) est déterminée comme étant une version plus ancienne qu'une liste de révocation (44) maintenue par le serveur d'enregistrement de données (34), l'unité de traitement de données acquiert la liste de révocation (44) à partir du serveur de fourniture de liste de révocation (34).

5. Serveur de fourniture d'informations de correspondance de contenu (33) qui enregistre une clé de cryptage (43) dans un dispositif de stockage d'informations (20) rattaché à un appareil de traitement d'informations (10), la clé de cryptage (43) devant être utilisée pour décrypter un contenu crypté enregistré dans le dispositif de stockage d'informations (20),
le serveur de fourniture d'informations de correspondance de contenu (33) étant configuré pour
transmettre des informations d'accès concernant une liste de révocation (44) devant être enregistrée dans l'unité de stockage de données (20) à l'appareil de traitement d'informations (10), et
envoyer une commande de processus d'écriture de liste de révocation qui n'inclut pas les données véritables de la liste de révocation au dispositif de stockage d'informations (20).

6. Serveur de fourniture d'informations de correspondance de contenu selon la revendication 5, qui exécute un processus d'authentification auprès du dispositif de stockage d'informations (20), et exécute un processus destiné à écrire la clé de cryptage (43) en cas de réussite de l'authentification.

7. Serveur de fourniture d'informations de correspondance de contenu selon la revendication 5, qui transmet un URL de liste de révocation comme les informations d'accès concernant la liste de révocation (44) à l'appareil de traitement d'informations (10).

8. Serveur de fourniture d'informations de correspondance de contenu selon la revendication 5, qui transmet différents URL de liste de révocation à des appareils de traitement d'informations (10) respectifs.

9. Serveur de fourniture d'informations de correspondance de contenu selon la revendication 7, dans lequel l'URL de liste de révocation est un URL correspondant à des données stockées dans un serveur de fourniture de liste de révocation (34) formant un CDN (réseau de distribution de contenu).

10. Système de traitement d'informations (10) comprenant :
un appareil de traitement d'informations (100) configuré pour utiliser un contenu stocké dans un dispositif de stockage d'informations (120) ;
un serveur de gestion d'utilisation de contenu (130) configuré pour fournir des informations de permission d'utilisation de contenu à l'appareil de traitement d'informations (100) ;
un serveur de fourniture d'informations de correspondance de contenu (150) configuré pour fournir une clé de cryptage devant être utilisée pour décrypter un contenu crypté stocké dans le dispositif de stockage d'informations (120) ; et
un serveur de fourniture de liste de révocation (160) maintenant une liste de révocation (161) devant être stockée dans le dispositif de stockage d'informations (120),
l'appareil de traitement d'informations (100)
acquérant les informations de permission d'utilisation de contenu à partir du serveur de gestion d'utilisation de contenu (130),
acquérant des informations d'accès concernant la liste de révocation (161) à partir du serveur de fourniture d'informations de correspondance de contenu,
acquérant la liste de révocation (161) à partir du serveur de fourniture de liste de révocation (160) à l'aide des informations d'accès acquises, et
enregistrant la liste de révocation (161) acquise dans le dispositif de stockage d'informations (120) en utilisant une commande d'écriture de liste de révocation émise à partir du serveur de fourniture d'informations de correspondance de contenu (150),
l'appareil de traitement d'informations (100) exécutant un processus destiné à entrer une commande de processus d'écriture de données qui n'inclut pas une liste de révocation (160) à partir du serveur de fourniture d'informations de correspondance de contenu (150), insérer la liste de révocation (160) acquise dans la commande, exécuter un processus sur la base de la commande, et enregistrer la liste de révocation (161) dans le dispositif de stockage d'informations (120) .

11. Système de traitement d'informations selon la revendication 10, dans lequel l'appareil de traitement d'informations (100)
acquiert un URL de liste de révocation (172) comme les informations d'accès concernant la liste de révocation (161) à partir du serveur de fourniture d'informations de correspondance de contenu (150), et
acquiert la liste de révocation (161) à partir du serveur de fourniture de liste de révocation (160) en utilisant l'URL de liste de révocation (172) acquis.

12. Procédé de traitement d'informations mis en oeuvre dans un appareil de traitement d'informations,
l'appareil de traitement d'informations comprenant
une unité de traitement de données configurée pour contrôler la mise à jour d'une liste de révocation devant être stockée dans une unité de stockage de données rattachée à l'appareil de traitement d'informations,
l'unité de traitement de données exécutant les étapes suivantes :
acquérir des informations d'accès concernant la liste de révocation à partir d'un serveur d'enregistrement de données exécutant un enregistrement de données sur l'unité de stockage de données,
acquérir la liste de révocation à partir d'un serveur de fourniture de liste de révocation, à l'aide des informations d'accès acquises, et
enregistrer la liste de révocation acquise dans l'unité de stockage de données,
le procédé comprenant en outre :
recevoir une commande de processus d'écriture de données qui n'inclut pas une liste de révocation (44) à partir du serveur d'enregistrement de données,
insérer la liste de révocation (44) acquise dans la commande,
exécuter un processus sur la base de la commande, la commande de processus d'écriture de données étant une commande destinée à écrire des données dans l'unité de stockage de données (20).

13. Programme permettant d'amener un appareil de traitement d'informations (10) comprenant une unité de traitement de données à exécuter un traitement d'informations selon le procédé de la revendication 12.
